# EUROPEAN PATENT APPLICATION

(11) **EP 4 834 516 A1**
(43) Date of publication of application: **04.11.2026**
(21) Application number: 26175515.1
(22) Date of filing: 29.04.2026
(51) Int. Cl.: B23K 23/00, B22C 9/06, B23K 101/38

(54) **FILTERED EXOTHERMIC WELDING SYSTEMS AND METHODS**

(30) Priority: 29.04.2025 US 202563796588 P; 05.12.2025 US 202563931925 P
(71) Applicant: Erico International Corporation, Solon, OH 44139 (US)
(72) Inventor: Bendlak, Thomas Edward, Macedonia (US); Bancroft, Hunter, Solon (US); Palmer, Marianna, Chesterland (US); Turner, Nicholas J., North Royalton (US); Smith, Michael, Solon , 44139 (US)
(74) Representative: Barker Brettell LLP

(57) **Abstract**

Some examples of the disclosure provide an exothermic welding system (200). The exothermic welding system includes a mold (205) defining a crucible chamber, a filter assembly (220) including a helical bore to direct particulates generated by an exothermic welding process within the crucible chamber, and an adapter (215) defining an exhaust passage between a first end and a second end of the adapter. The adapter is selectively securable to the mold at the first end and selectively securable to the filter assembly at the second end.

## Description

### CROSS-REFERENCE TO RELATED APPLICATIONS

This application claims priority to U.S. Patent Application No. 63/796,588, filed April 29, 2025, and entitled, "Filtered Exothermic Welding Systems and Methods" and U.S. Patent Application No. 63/931,925, filed December 5, 2025, and entitled, "Filtered Exothermic Welding Systems and Methods," each of which is hereby incorporated by reference in its entirety.

### BACKGROUND

Exothermic welding can be used in different settings to form high quality, high ampacity, and low resistance electrical connections between different conductors. In general, an exothermic welding process can fuse together separate conductors to provide a bond with a current carrying capacity substantially equal to that of the conductors themselves. Further, exothermic welds can be relatively durable and long-lasting, and can avoid problems of loosening and corrosion that can occur for mechanical and compression joints. As a result of these benefits exothermic weld connections are widely used in grounding systems and other settings to enable connected sets of conductors to operate, effectively, as a continuous conductor with relatively low resistivity.

### SUMMARY

Some examples of the disclosure provide an exothermic welding system. The exothermic welding system can include a mold defining a crucible chamber, a filter assembly including a helical bore to direct particulates generated by an exothermic welding process within the crucible chamber, and an adapter defining an exhaust passage between a first end and a second end of the adapter. The adapter can be selectively securable to the mold at the first end and selectively securable to the filter assembly at the second end.

In some examples, a first end of an adapter is securable to a mold via a press-fit.

In some examples, a filter assembly can include a filter housing and filter media arranged within the filter housing to filter particulates generated by the exothermic welding process.

In some examples, a filter assembly is securable to a second end of an adapter via a press-fit between a filter housing and the adapter.

In some examples, a crucible chamber is configured to receive a cup containing weld material. The cup can include an ignition strip extending from a rim of the cup.

In some examples, a first end of the adapter defines a cutout to permit an ignition strip to pass through the adapter, with a cup received in a crucible chamber and the adapter secured to a mold.

In some examples, a first end of an adapter includes a retaining ledge configured to surround a mold to selectively secure the adapter to the mold.

In some examples, a bore extends helically upward along a longitudinal axis of a filter assembly.

In some examples, a bore extends helically upward along a longitudinal axis of a filter assembly in a first rotational direction for a first section of a filter assembly. The bore can extend helically upward along the longitudinal axis of the filter assembly in a second rotational direction for a second section of the filter assembly, such that the bore changes rotational direction from the first rotational direction to the second rotational direction.

In some examples, an adapter surrounds a portion of a filter assembly when the adapter is secured to the filter assembly. The adapter can surround a portion of a mold when the adapter is secured to the mold.

In some examples, a filter assembly can include a base including a first protrusion and a second protrusion. The first protrusion can surround the second protrusion. When the adapter is secured to a filter assembly, the first protrusion can be positioned in a recess of an adapter, and the second protrusion can be positioned in a hole of the adapter. The adapter can include a polymer. The polymer can include silicone.

Some examples of the disclosure provide a method of using an exothermic welding system. The method can include placing a cup containing weld material within a crucible chamber defined by a mold, selectively performing either of a filtered exothermic welding process or an unfiltered exothermic welding process, including: for the filtered exothermic welding process, securing a first end of an adapter around the pedestal defined by the mold, and for the filtered exothermic welding process, securing a filter assembly to a second end of the adapter to filter particulates generated by the exothermic welding process.

In some examples, a method can include, for a filtered exothermic welding process, arranging a cutout defined by a first end of an adapter so that an ignition strip of a cup passes through the cutout.

In some examples, a method can include, for a filtered exothermic welding process, igniting weld material via an ignition strip to perform the filtered exothermic welding process.

In some examples, a method can include, for an unfiltered exothermic welding process, igniting weld material via an ignition strip extending from a cup to perform the unfiltered exothermic welding process.

Some examples of the disclosure provide an exothermic welding system. The exothermic welding system can include a mold defining a crucible chamber and a filter assembly. The filter assembly can include a perforation, a filter to trap particulates generated by an exothermic welding process, and a bore that extends helically upward along a longitudinal axis of the filter assembly. A gas produced during an exothermic welding process can pass through bore, through the filter, and out the perforation. The exothermic welding system can include an adapter defining an exhaust passage between a first end and a second end of the adapter. The adapter can be selectively securable to the mold at the first end and selectively securable to the filter assembly at the second end.

In some examples, a filter assembly can include a pole and a plurality of supports coupled to the pole. The plurality of supports can define the bore.

In some examples, an adapter surrounds a portion of a filter assembly when the adapter is secured to the filter assembly. The adapter can surround a portion of a mold when the adapter is secured to the mold.

In some examples, a method can include a polymer. The polymer can include silicone.

In some examples, an adapter can include a first recess and a second recess. When a mold is secured to the adapter, the mold can be positioned in the first recess of the adapter. When; a filter assembly is secured to the adapter, the filter assembly can be positioned in the second recess of the adapter.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. One or more features described in connection with the system, and/or any other feature(s) or component(s) described, may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the invention and, together with the description, serve to explain the principles of examples of the invention:
FIG. 1 is cross-sectional view of an exothermic welding system.
FIG. 2 is an exploded view of an exothermic welding system according to aspects of the present disclosure.
FIG. 3 is a cross-sectional view of the exothermic welding system of FIG. 2.
FIG. 4 is a cross-sectional view of a portion of a filter assembly including an adapter for use with the exothermic welding system of FIG. 2.
FIG. 5 is an axonometric view of the adapter of FIG. 4.
FIG. 6 is an axonometric view of a mold of the exothermic welding system of FIG. 2.
FIG. 7 is an exploded view of another example of an exothermic welding system according to aspects of the present disclosure.
FIG. 8 is an exploded view of yet another example of an exothermic welding system according to aspects of the present disclosure.

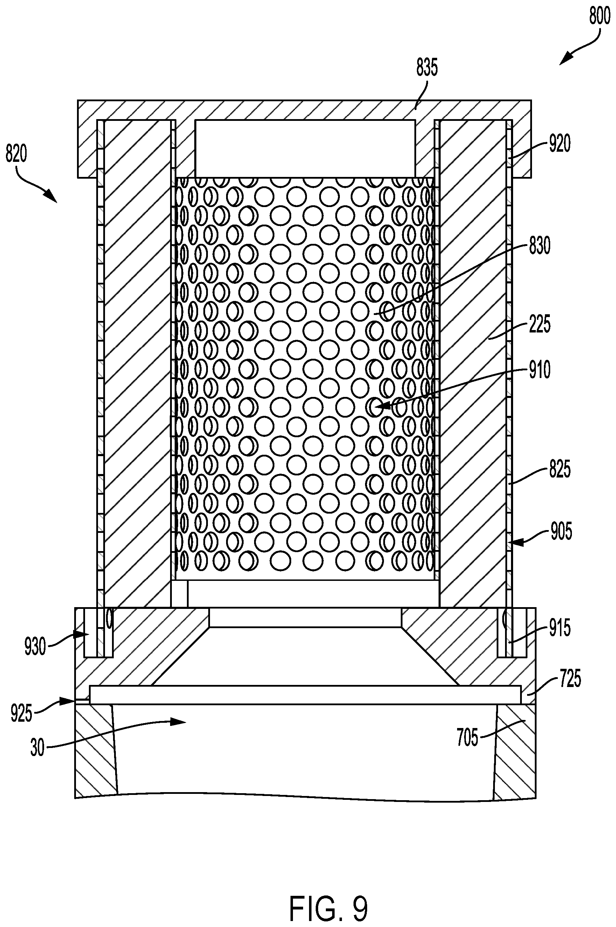

FIG. 9 is a cross-sectional view of the exothermic welding system of FIG. 8.
FIG. 10 is an isometric view of another example of a filter assembly of an exothermic welding system according to aspects of the present disclosure.
FIG. 11 is a bottom view of the filter assembly of FIG. 10.
FIG. 12 is a cross-sectional view of the filter assembly of FIG. 10, taken along line 12-12 of FIG. 11.
FIG. 13 is another cross-sectional view of the filter assembly of FIG. 10, taken along line 13-13 of FIG. 11.
FIG. 14 is another cross-sectional view of the filter assembly of FIG. 10, taken along line 14-14 of FIG. 10.
FIG. 15 is a front isometric view of another example of an adapter of an exothermic welding system for use with the filter assembly of FIG. 10, according to aspects of the present disclosure.
FIG. 16 is a rear isometric view of the adapter of FIG. 15.
FIG. 17 is a cross-sectional view of the adapter of FIG. 15 engaged with the filter assembly of FIG. 10.
FIG. 18 is a bottom isometric view of the adapter of FIG. 15.
FIG. 19 is an isometric view of another example of a filter assembly of an exothermic welding system according to aspects of the present disclosure.
FIG. 20 is a bottom isometric view of the filter assembly of FIG. 19.
FIG. 21 is a cross-sectional view of the filter assembly of FIG. 19, taken along line 21-21 of FIG. 19.
FIG. 22 is another cross-sectional view of the filter assembly of FIG. 19, taken along line 22-22 of FIG. 19.
FIG. 23 is an isometric view of another example of a filter assembly of an exothermic welding system according to aspects of the present disclosure.
FIG. 24 is a bottom isometric view of the filter assembly of FIG. 23.
FIG. 25 is a cross-sectional view of the filter assembly of FIG. 23, taken along line 25-25 of FIG. 23.
FIG. 26 is another cross-sectional view of the filter assembly of FIG. 23, taken along line 26-26 of FIG. 23.
FIG. 27 is another cross-sectional view of the filter assembly of FIG. 23, taken along line 27-27 of FIG. 23.
FIG. 28 is an isometric view of another example of a filter assembly of an exothermic welding system according to aspects of the present disclosure.
FIG. 29 is front isometric view of another example of an exothermic welding system according to aspects of the present disclosure.
FIG. 30 is an exploded view of the exothermic welding system of FIG. 29.

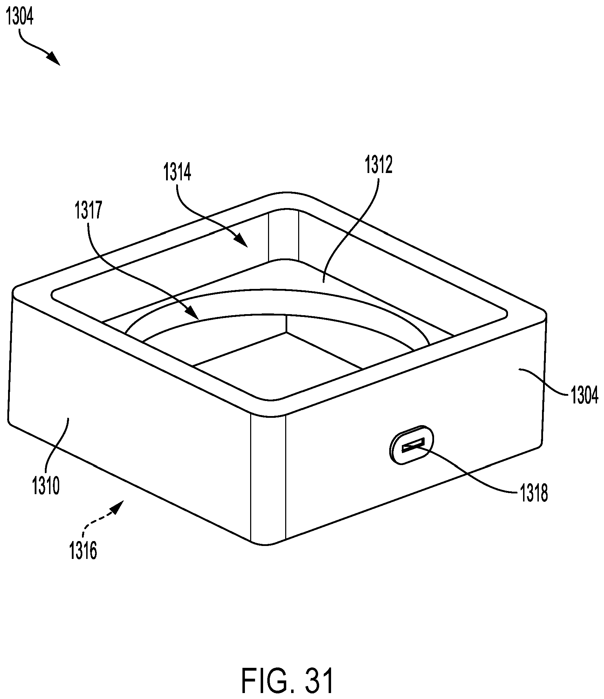

FIG. 31 is a front isometric view of an adapter of the exothermic welding system of FIG. 29.
FIG. 32 is bottom isometric view of a filter assembly of the exothermic welding system of FIG. 29.
FIG. 33 is a cross-section view of the exothermic welding system of FIG. 29, taken along line 33-33 of FIG. 29.
FIG. 34 is front isometric view of another example of an exothermic welding system according to aspects of the present disclosure.
FIG. 35 is an exploded view of the exothermic welding system of FIG. 34.
FIG. 36 is a cross-section view of the exothermic welding system of FIG. 34, taken along line 36-36 of FIG. 34.
FIG. 37 is a bottom view of a filter assembly of the exothermic welding system of FIG. 34.

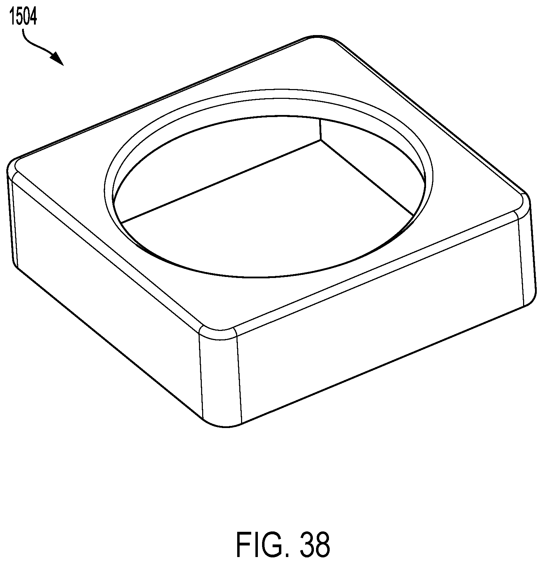

FIG. 38 is a front isometric view of an adapter of the exothermic welding system of FIG. 34.
FIG. 39 is front isometric view of another example of a filter assembly according to aspects of the present disclosure.
FIG. 40 is flowchart of a process for preparing for and initiating an exothermic weld according to aspects of the present disclosure.

### DETAILED DESCRIPTION

The following discussion is presented to enable a person skilled in the art to make and use examples of the invention. Given the benefit of this disclosure, various modifications to the illustrated examples will be readily apparent to those skilled in the art, and the principles herein can be applied to other examples and applications without departing from examples of the invention. Thus, examples of the invention are not intended to be limited to examples shown, but are to be accorded the widest scope consistent with the principles and features disclosed herein.

The following detailed description is to be read with reference to the figures, in which like elements in different figures have like reference numerals. The figures, which are not necessarily to scale, depict selected examples and are not intended to limit the scope of examples of the invention. Skilled artisans will recognize the examples provided herein have many useful alternatives and fall within the scope of examples of the invention.

Before any examples of the invention are explained in detail, it is to be understood that the invention is not limited in its application to the details of construction and the arrangement of components set forth in the following description or illustrated in the following drawings. The invention is capable of other examples and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As noted above, exothermic welding can be used to connect together metal structures, such as copper conductors of an electrical system. Generally, exothermic mixtures can include a combination of a reductant metal and a transition metal oxide, which upon ignition react exothermically to supply sufficient heat to propagate and sustain a continuing reaction of the mixture. The resulting heat can be used directly, or the resulting molten metal can be used to create a useful weld, as in the case of exothermic welding.

As one example, some conventional exothermic welding material mixtures can include aluminum and copper oxide. Upon ignition, the resulting exothermic reaction can provide a mixture of molten copper and aluminum oxide (the latter being commonly referred to as "slag"). The molten copper has a higher density than the slag and can accordingly be caused by gravity to flow within a mold to weld together metal conductors (e.g., copper to copper or steel to steel). The less dense aluminum oxide slag is generally removed from the weld connection, or from other parts of the mold in which it may accumulate, and discarded. As another example, other conventional mixtures can include iron oxide and aluminum, which can react with similar effect.

Exothermic mixtures of this type do not react spontaneously and need a method of initiating the reaction, which involves generating enough localized energy to enable the exothermic reaction to begin (e.g., overcoming the activation energy). One method of initiating ignition is through use of starting powder and an ignition source such as an electric ignitor or a flint ignitor. For example, a disk (e.g., metallic disk) can be positioned within the mold used to guide the exothermic weld process. Following this, an appropriate amount of exothermic material can be placed into the mold on top of the disk, and a starting powder or material may be sprinkled over the top of the exothermic welding material prior to ignition. The mold may then be closed, and the exothermic reaction initiated by igniting the starting powder via an electrical ignitor or flint ignitor. In another example, a cup (e.g., a metallic cup) may be used in lieu of the disk. For example, the cup may contain both the exothermic material or starting powder and to serve as the disk, which reduces the total number of components needed (i.e., no longer need a separate disk) and facilitates efficient operation.

In some examples, once the exothermic reaction is initiated, particulate materials, smoke, and flames may be expelled from the container during the exothermic welding process, which may be undesirable to an operator. For example, when an operator is working indoors or in an enclosed space, the emission of particulate materials, smoke, and flames during the exothermic welding process may be undesirable.

To address these and other issues, examples of the disclosed technology can provide an exothermic welding system that includes a filter assembly configured to filter particulate materials given off by the exothermic welding process, while still permitting the venting of hot gases that result from the exothermic reaction. In some examples, the filter assembly may be removably secured to the mold via an adapter. For example, a first end of the adapter may be secured to the mold (e.g., via a press-fit, one or more pins, or any other known connection method), while the filter assembly may be secured to a second, opposite end of the adapter.

In some examples, via the use of the adapter, a single mold may be used for both filtered and unfiltered exothermic welding processes. For example, if an operator desires to perform a filtered exothermic welding process (e.g., when indoors or in an enclosed space), the operator may place a cup (e.g., containing the exothermic material) within the mold, install the adapter on the mold (e.g., via pins, press-fit, etc.), and then install the filter assembly on the adapter. In other examples, rather than using a cup (e.g., containing the exothermic material), the operator may place disc (e.g., a metallic disc) within the mold and then pour exothermic material (e.g., weld metal) into the mold. Following this, the exothermic reaction may be initiated by igniting the starting powder via an electrical ignitor. In another example, if an operator desires to perform an unfiltered exothermic welding process (e.g., when outdoors), the operator may place a cup (e.g., containing the exothermic material) within the mold (e.g., and not install the adapter or filter assembly). Following this, the exothermic reaction may be initiated by igniting an electrical ignitor.

In some examples, the adapter may include a cutout positioned at the first end of the adapter. The cutout may be sized to accommodate an ignition strip (e.g., configured to be connected to an electrical ignitor), so that the ignition strip may protrude out of (e.g., past) the adapter to permit connection of the ignition strip to the electrical ignitor. In some examples, the cutout may be sized so that a seal is formed between the ignition strip and the cutout, which restricts the flow of particulate materials out of the cutout.

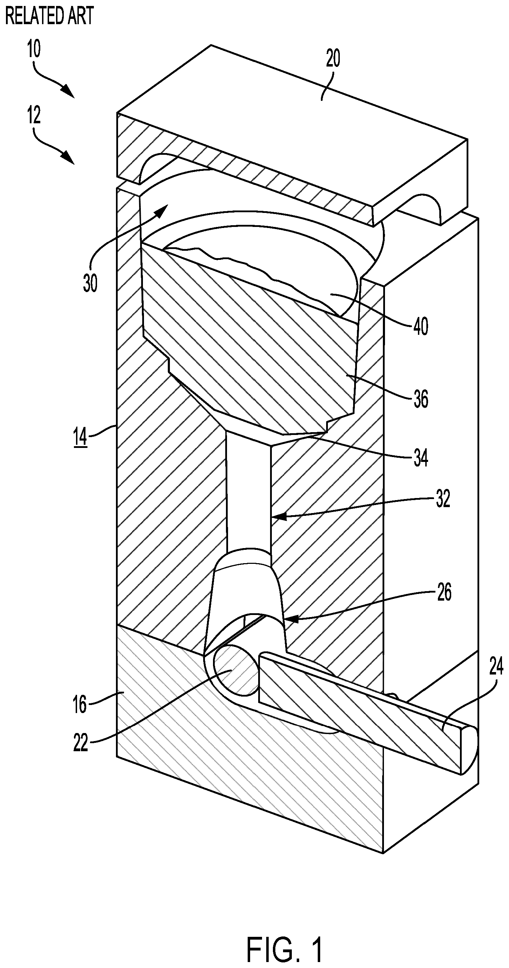

In conventional systems, in order to appropriately contain the large amount of heat produced by exothermic reactions, highly engineered and relatively expensive graphite molds can be used. In a conventional arrangement illustrated in FIG. 1, for example, a conventional welding apparatus 10 uses a split graphite mold 12. In the example illustrated, the mold 12 includes an upper mold body section 14, a lower mold body section 16, and a mold cover 20 formed as a hinged or other lid. The body sections 14, 16 of the mold 12 align to define a weld chamber 26, as well as channels leading thereto. Conductors to be joined, such as copper bars 22, 24, are appropriately cleaned and then placed in alignment with the channels to project into the weld chamber 26. To hold and react exothermic material, the upper mold body section 14 includes a crucible chamber 30 disposed generally above the weld chamber 26, and connected to the weld chamber 26 by a tap hole 32. With the mold body sections 14, 16 securely closed, a metal disk 34 (or a metallic cup including starting powder/weld material) can be positioned in the crucible chamber 30 over the tap hole 32. An appropriate amount of exothermic material 36 can be placed into the crucible chamber 30 on top of the disk 34, and a starting material (e.g., starting powder 40) may be sprinkled over the top of the exothermic welding material 36 prior to ignition. The mold cover 20 is then closed and the exothermic reaction initiated by igniting the starting powder 40 by the use of an electrical ignitor or flint ignitor.

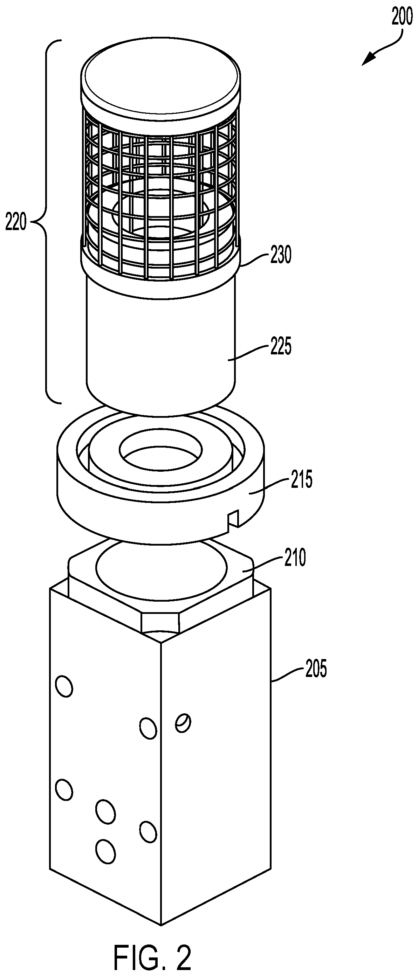

FIG. 2 illustrates an example of an exothermic welding system 200. The exothermic welding system 200 may include a mold 205 (e.g., a graphite mold), which may include a crucible (e.g., extending inward at a top face of the mold), a weld chamber, and a tap hole fluidly connecting the crucible to the weld chamber to permit molten weld material to flow from the crucible to the weld chamber during the exothermic welding process (e.g., as discussed above). In some examples, the mold 205 may permit an operator to perform filtered or unfiltered exothermic welding processes, with the use of only a single mold.

The exothermic welding system 200 may further include a filter assembly 220, which may include a filter housing 230 and one or more filters formed from various filter media. For example, the one or more filters may include a filter 225. In some examples, the filter may comprise any non-melting or appropriate high-melting point filter media, and, in preferred examples, the filters may comprise a fibrous, non-melting felt-based material. For example, a preferred filter may be formed from a non-melting felt, such as carbon-based felt, graphitized felt, or a ceramic fiber felt. In other examples, other filter materials may be used. In some examples, the filter permits the passage of gasses (e.g., air) into and out of the container to prevent pressurization of the container during the exothermic welding process, while preventing the passage of particulate materials and flames during the exothermic welding process.

In some examples, in order to permit an operator to selectively perform filtered exothermic welding processes, the exothermic welding system 200 may include an adapter 215. The adapter 215 may be selectively secured to the mold 205 (e.g., via a pedestal 210 formed on an end of the mold) to permit an operator to secure the filter assembly 220 to the mold 205 and provide an exhaust passage between the crucible of the mold 205 and the filter assembly 220. In some examples, rather than using the adapter 215, the filter assembly 220 may instead be secured directly to the mold 205. However, in some examples, using the adapter 215 may permit the use of varying sizes of mold. In other examples, the adapter 215 may form a buffer between the filter assembly 220 and the exothermic reaction (e.g., within the mold), which may increase the overall life of the filter. Further, in some examples, the adapter 215 may form a better seal between the filter and the mold (e.g., via the adapter) vs. the filter assembly directly mounted to the mold, which may mitigate the risk of gasses bypassing the filter. In some examples, the adapter 215 may define a hollow cylindrical (e.g., donut) shape, which may be secured between the mold 205 and the filter assembly 220 (e.g., secured to the filter housing 230).

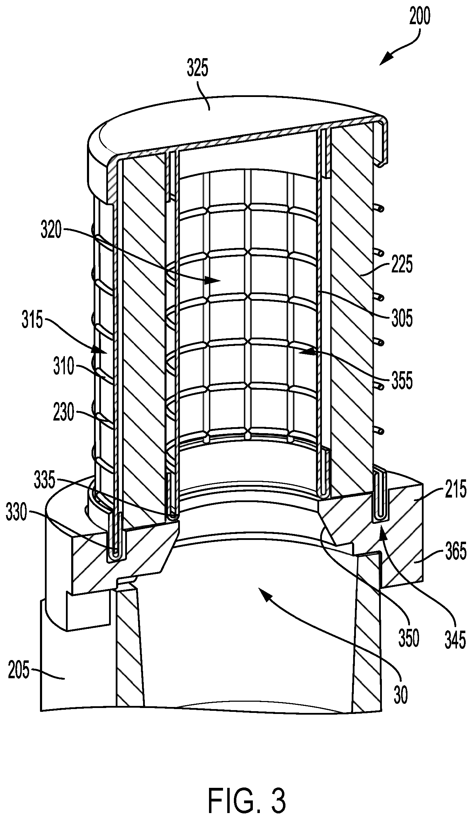

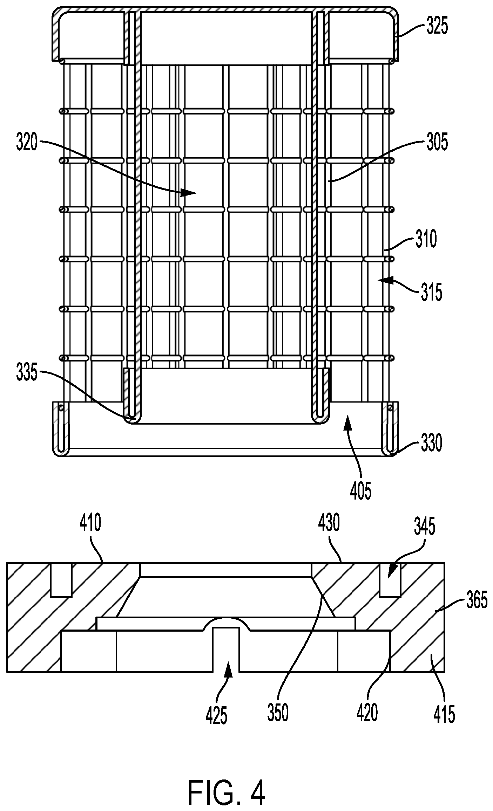

Turning to FIG. 3, an example of the exothermic welding system 200 is shown with the adapter 215 installed. In some examples, as further shown in FIGS. 4-6, the adapter 215 may include a body 365 with a first end 410 and a second end 415. In some examples, the body 365 of the adapter 215 may define a hollow cylindrical (e.g., donut) shape. However, in other examples, the body 365 of the adapter 215 may define other shapes (e.g., rectangular, polygonal, etc.).

In some examples, to secure the adapter 215 to the mold 205, the second end 415 of the adapter 215 may be arranged over the pedestal 210 of the mold 205. For example, the second end 415 of the adapter 215 may include a retaining ledge 420, which may be configured to surround the pedestal 210 of the mold 205. In some examples, a shape of the retaining ledge (e.g., an interior perimeter wall 510) may be complementary to a shape of the pedestal 210 (e.g., an exterior perimeter wall 610), or otherwise shaped, so that the adapter 215 may be secured to the pedestal 210 via a press-fit. However, in other examples, alternative methods of securing the adapter 215 to the mold are envisioned (e.g., snap-fit, threaded connection, using fasteners, etc.).

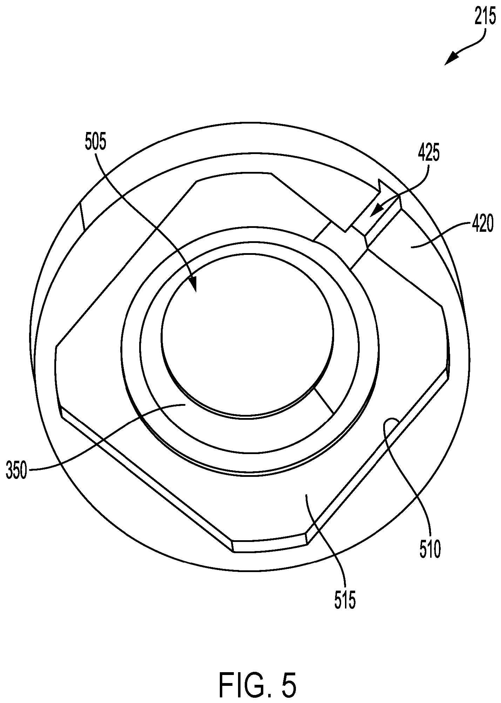

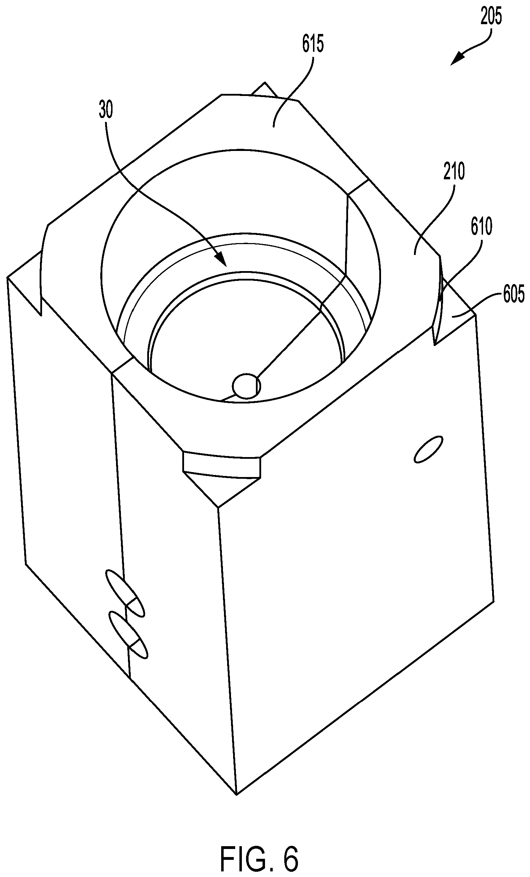

In some examples, the pedestal 210 may extend upward from a face 605 of the mold so that the retention ledge 420 of the adapter 215 is recessed below a surface 615 of the pedestal 210. Correspondingly, in some examples, when the adapter 215 is seated on the pedestal 210, the surface 615 of the pedestal 210 (see FIG. 6) may abut an interior surface 515 of the adapter 215 (see FIG. 5). Thus, when the adapter 215 is installed onto the mold 205, a seal may be formed between the mold and the adapter to prevent the escape of gasses, particulates, or other byproducts of the exothermic welding process.

In some examples, to secure the filter assembly 220 to the adapter 215, the filter housing 230 may be arranged within a groove 345 formed in the first end 410 of the adapter 215. For example, the filter housing 230 may be secured to the first end of the adapter via a press-fit, with a first (e.g., outer) cage 310 of the filter housing 230 within the groove 345 of the adapter 215. However, in other examples, alternative methods of securing the filter housing 230 to the adapter 215 are envisioned (e.g., snap-fit, threaded connection, using fasteners, etc.). In some examples, as the first cage 310 of the filter housing 230 may be recessed within the groove 345, the first end 410 of the adapter 215 may extend past a first end 330 of the first cage 310 to form a seal between the filter assembly 220 and the adapter 215 to prevent the escape of gasses, particulates, or other byproducts of the exothermic welding process. Correspondingly, in some examples, to further seal the adapter 215, a first end 335 of a second (e.g., inner) cage 305 of the filter housing 230 may abut a plinth 430 of the adapter 215 (see FIG. 4).

In some examples, in order to permit the escape of gasses from the exothermic welding process, while preventing the escape of particulates, the filter housing 230 may include a two-part cage formed from the first cage 310 and the second cage 305, which may each be sealed by a cap 325 at one end (e.g., at an end opposite the adapter 215). In some examples, the first and second cages may be spaced apart to form a circumferential gap 405 between the first and second cages. In some examples, the gap 405 may be configured to receive and retain the filter 225 therein. Further, in some examples, in order to permit the escape of gasses from the exothermic welding process, the first and second cages may define a series of openings 315, 320. Put differently, the first and second cages 305, 310 may form a mesh (e.g., a wire mesh) retaining the filter 225, or other array of openings that can allow the passage of gasses while still retaining the filter 225. In some examples, the openings 315, 320 may be defined by the first and second cages 310, 305, which may also serve to retain the filter 225 (e.g., retain the filter 225 between the first and second cages of the filter housing 230). Further, in some cases, the cages 310, 305 can serve multiple purposes, to structurally support the filter 225 while providing pathways for gasses to escape out, with the filter 225 trapping and blocking passage of particulates therethrough (e.g., if the cages did not include openings, and were instead solid, particulates would be blocked, but gasses would be prevented from escaping). Further, each perforation can block larger particulates from passing through or otherwise being emitted beyond the filter assembly as formed during the exothermic reaction.

Thus, gasses and particulates from the exothermic welding process may flow through the crucible chamber 30, through an aperture 505 in the adapter 215 (e.g., as guided by an internal chamfer 350 or other internal taper of the adapter), and through a bore 355 of the filter housing 230, with the particulates being captured by the filter 225 and the filtered gasses passing through the filter 225 and out of the openings (e.g. the openings 315). As should be appreciated, the relatively large area of the openings 315, 320 may permit efficient gas flow to and from the filter 225 (e.g., to reduce pressure within the bore 355, etc.).

With reference to FIG. 4, the second end 415 of the adapter 215 defines a cutout 425. In some examples, the cutout 425 may be configured to permit the protrusion out of the adapter 215 of an ignition strip of a welding cartridge (e.g., a metallic cup containing weld material) or an external ignition source (e.g., in applications utilizing a metallic disc and loose exothermic material), so that an operator may secure one or more electric ignitors (e.g., wires, etc.) to the ignition strip. In some examples, the cutout 425 may be sized to be (e.g., define a height from an end edge of the second end 415) about equal to a depth of the retaining ledge 420 plus a thickness of the ignition strip. Thus, a seal may be formed between the cutout 425 and the ignition strip, which may prevent the escape of gasses, particulates, or other byproducts of the exothermic welding process from the cutout 425.

In an example use case of the exothermic welding system 200, to perform a filtered welding process, an operator may select a cup (or other cartridge) containing an appropriate amount of weld material and position the cup within the mold 205, with a rim of the cup resting on the surface 615 of the pedestal 210 of the mold 205. Following this, the operator may arrange the second end 415 of the adapter 215 over the pedestal 210, with the retention ledge 420 surrounding the pedestal 210. In some examples, the operator may align the adapter 215 so that the cutout 425 is aligned with the ignition strip of the cup. The operator may then secure the filter assembly 220 (e.g., including the filter 225) to the first end 410 of the adapter 215. Following this, the operator may secure an electronic ignitor (e.g., one or more wires, etc.) to the ignition strip and initiate the exothermic welding process. As a result of the exothermic welding process, gasses (e.g., including particulates) may pass through the aperture 505 of the adapter 215 and into the bore 355 of the filter assembly 220 with the filter 225 capturing the particulates and permitting filtered gasses to flow out of the openings 315, 320 of the first and second cages 305, 310.

Correspondingly, if the operator does not desire to perform a filtered welding process, the operator may select a cup (or other cartridge) containing an appropriate amount of weld material and position the cup within the mold 205, with a rim of the cup resting on the surface 615 of the pedestal 210 of the mold 205. Following this, the operator may secure an electronic ignitor (e.g., one or more wires, etc.) to the ignition strip and initiate the exothermic welding process. Following the exothermic welding process, gasses (e.g., including particulates) may pass out of the mold 205 without filtering. Thus, a single mold 205 may be selectively used for both filtered and unfiltered exothermic welding processes via the use of the adapter 215 and the filter assembly 220.

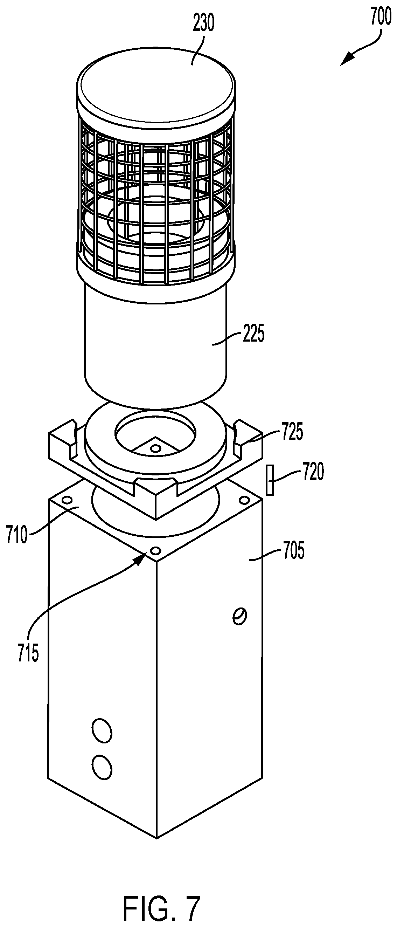

FIG. 7 illustrates another example of an exothermic welding system 700. The exothermic welding system 700 shares a number of components in common with and operates in a similar fashion to the examples illustrated and described previously (e.g., the exothermic welding system 200). For the sake of brevity, these common features will not be again described below in detail. Rather, previous discussion of commonly named or numbered features, unless otherwise indicated, also applies to example configurations of the exothermic welding system 700.

In some examples, rather than securing the adapter to the mold via a press-fit arrangement (e.g., with the mold including a pedestal to receive a portion of the adapter), the mold and adapter may instead be secured together via one or more retaining pins 720. For example, a mold 705 may include a face 710 with one or more holes (e.g., blind holes) 715 therein (e.g., at corners of the mold, or other locations). In some examples, the one or more retaining pins 720 may be arranged within the holes 715, with a portion of the pins protruding upward from the face 710 of the mold. Correspondingly, the second end of the adapter 725 may include one or more holes (e.g., blind holes). Thus, to secure the adapter 725 to the mold 705, the operator may align the holes in the adapter 725 with the pins 720. Following this, the operator may press the adapter 725 onto the pins 720 so that the pins seat within the holes of the adapter and secure the adapter 725 to the mold 705.

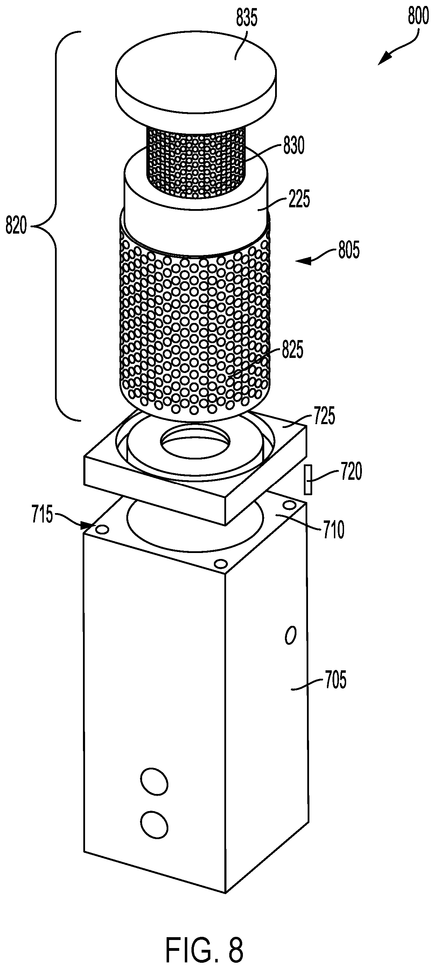

FIG. 8 illustrates another example of an exothermic welding system 800. The exothermic welding system 800 shares a number of components in common with and operates in a similar fashion to the examples illustrated and described previously (e.g., the exothermic welding systems 200, 700). For the sake of brevity, these common features will not be again described below in detail. Rather, previous discussion of commonly named or numbered features, unless otherwise indicated, also applies to example configurations of the exothermic welding system 800.

In some examples, rather than including a mesh-type filter housing, the filter assembly 820 may instead include a perforated filter housing (e.g., with smaller openings vs. the mesh-type filter housing). In some examples, the filter assembly 820 may include a filter housing 805, with a first (e.g., outer) cage 825 and a second (e.g., inner) cage 830. In some examples, the first and second cages 825, 830 may be secured (e.g., enclosed) at a first end 920 via a cap 835, while a second end 915 (e.g., of the first cage 825) of the filter housing 805 may be arranged within a groove 930 of the adapter 725.

In some examples, a gap may be formed between the first and second cages to receive and secure the filter 225. Further, to permit the flow of gas through the first and second cages, the first and second cages may each include a series of perforations 905, 910. For example, each cage 825, 830 can be formed by creating the respective perforations 905, 910 into a sheet of material. Specifically, a flat sheet of material (e.g., a metal sheet) can be pressed to create the perforations, and then curved (e.g., rolled) and fastened together to create the cylindrical shape of the cage. In some cases, this process to create the cages 825, 830 can be faster and less labor intensive as compared to forming the cages 305, 310, which may require joining (e.g., welding) each overlap between adjacent filaments of a cage. In some examples, the perforations 905, 910 may provide smaller openings vs. the openings in the cages described previously (e.g., in FIGS. 2-6), which may slow the flow of gasses through the filter assembly 820. Further, in some examples, the adapter 725 may include a cutout 925 to permit the insertion of an ignition strip (e.g., configured to be connected to an electrical ignitor), so that the ignition strip may protrude out of (e.g., past) the adapter to permit connection of the ignition strip to the electrical ignitor. In some examples, the cutout may be sized so that a seal is formed between the ignition strip and the cutout, which restricts the flow of particulate materials out of the cutout.

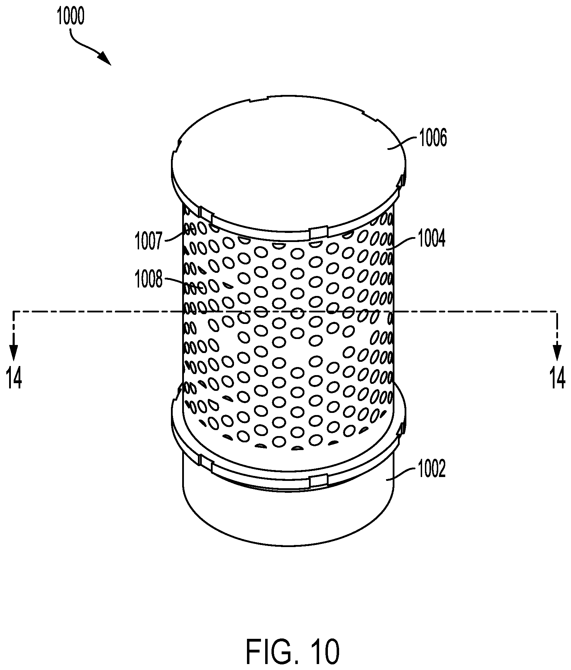

FIGS. 10-14 illustrate another example of a filter assembly 1000 of an exothermic welding system. The filter assembly 1000 shares a number of components in common with and operates in a similar fashion to the examples illustrated and described previously (e.g., the filter assemblies 220, 820). For the sake of brevity, these common features will not be again described below in detail. Rather, previous discussion of commonly named or numbered features, unless otherwise indicated, also applies to example configurations of the filter assembly 1000.

The filter assembly 1000 can include a base 1002, a cage 1004, and a cap 1006, each of which can be coupled together, or can be integrally formed together as a single monolithic component (e.g., formed as a single piece of material). In some cases, forming these components together can be easier to manufacture. In some cases, some or all of the components of the filter assembly 1000 can be integrally formed together as a single monolithic component (e.g., including the supports). For example, the top of the base 1002 can be coupled to the bottom of the cage 1004 and the top of the cage 1004 can be coupled to the bottom of the cap 1006. Therefore, in some cases, the cage 1004 can be positioned above the base 1002, and the cap 1006 can be positioned above the cage 1004. Similarly to the other cages described herein, the cage 1004 can include a plurality of perforations, such as the perforations 1007, 1008. Each perforation, including the perforations 1007, 1008 can permit gasses therethrough from the inside of the filter assembly 1000, through a respective perforation, and out of the filter assembly 1000. In some cases, each perforation can have the same (or substantially the same shape). For example, each perforation can have a circular shape, a square shape, an octagonal shape, a rectangular shape, etc. In some cases, perforations having circular shapes may be easier to manufacture than other shapes. In some examples, each perforation can have the same (or substantially the same size). In some cases, each perforation can be smaller than about 5 mm, 4.8 mm, etc., which can be advantageous since holes larger than this size may lead to structural issues for the cage. In some configurations each perforation can be greater than about 1 mm, about 1.5 mm, about 1.6 mm, etc., which can be advantageous since holes smaller than this size may be prone to clogging from particulates. In some cases, each perforation can be about 3/16 of an inch (i.e., 4.765 mm), while in other cases, each perforation can be about 1/8 of an inch (i.e., 3.175 mm). In some cases, the thickness of the cage 1004 can be about ¼ of an inch (i.e., 6.35 mm).

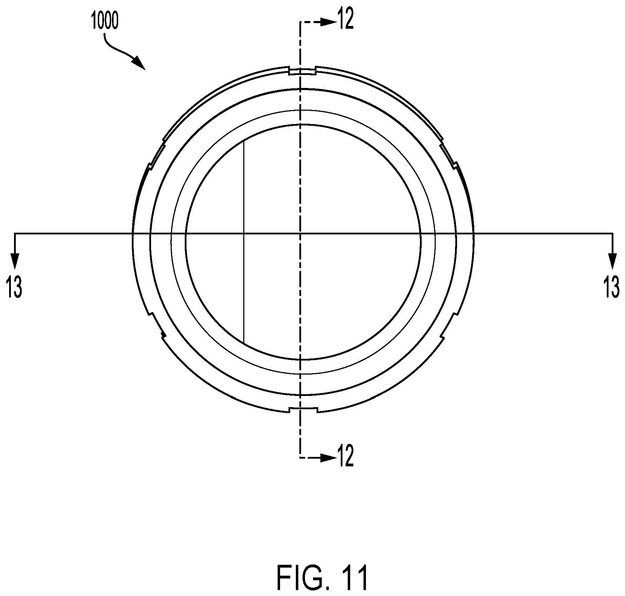

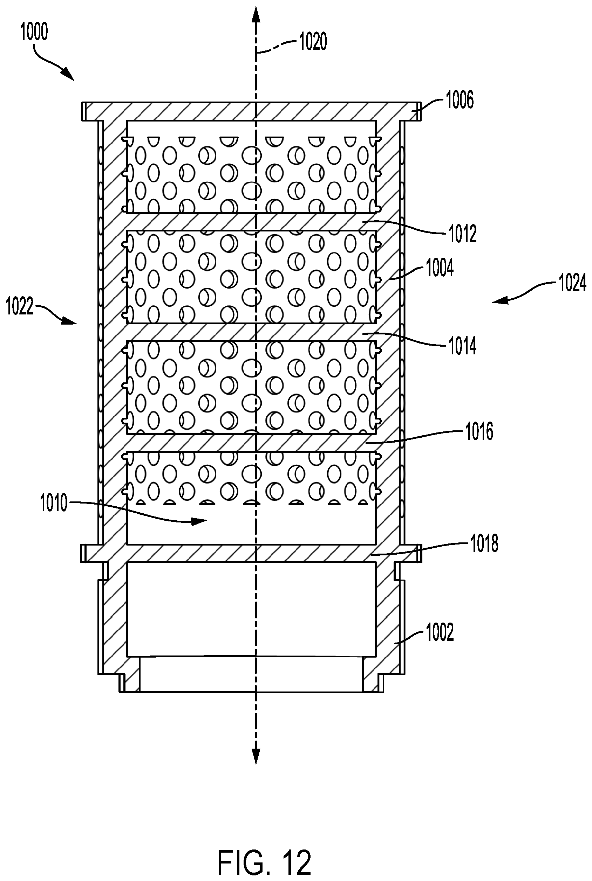

FIG. 12 shows a cross-sectional view of the filter assembly 1000 of FIG. 10, taken along line 12-12 of FIG. 11. The filter assembly 1000 can include a bore 1010 and one or more supports coupled to adjacent ends of the cage 1004. For example, the filter assembly 1000 can include supports 1012, 1014, 1016, 1018, each of which is positioned along a longitudinal axis 1020 (which can also be defined as an axial axis) of the filter assembly 1000. Each support 1012, 1014, 1016, 1018 can be coupled to opposing ends of the cage 1004. For example, a first end of each support 1012, 1014, 1016, 1018 can be coupled to the cage 1004 at an end 1022 (e.g., to the left of the axis 1020 relative to the view in FIG. 12) and a second end of each support 1012, 1014, 1016, 1018 can be coupled to the cage 1004 at an end 1024 (e.g., to the right of the axis 1020 relative to the view in FIG. 12). Stated a different way, at least one dimension of each support 1012, 1014, 1016, 1018 extends entirely across the bore 1010. Although four supports are shown in FIG. 12, the filter assembly 1000 can include other numbers of supports, such as, for example, two, three, five, six, etc. In some cases, the supports provide structural integrity to the cage (e.g., prevent the cage 1004 from collapsing under the hot gasses and increased pressures). Further, as described below, at least one dimension of each support does not extend across the entire bore 1010, so as to ensure that gasses can escape upwardly and therefore reach other upper perforations.

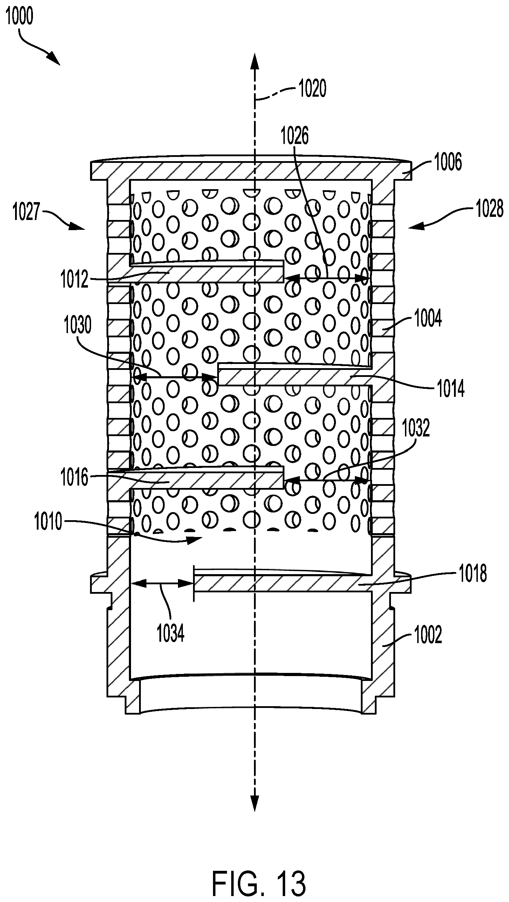

FIG. 13 shows a cross-sectional view of the filter assembly 1000 of FIG. 10, taken along line 13-13 of FIG. 11. As described above, at least one dimension of each support does not extend across the entire bore 1010. For example, a gap is positioned between a free end of each support and the cage 1004. Specifically, a gap 1026 is positioned between the free end of the support 1012 and the cage 1004 (e.g., at an end 1028 of the cage 1004 opposite the end 1027 of the cage 1004), a gap 1030 is positioned between the free end of the support 1014 and the cage 1004 (e.g., at an end 1027 of the cage 1004), a gap 1032 is positioned between the free end of the support 1016 and the cage 1004 (e.g., at an end 1028 of the cage 1004), and a gap 1034 is positioned between the free end of the support 1018 and the cage 1004 (e.g., at an end 1027 of the cage 1004). Each gap 1026, 1030, 1032, 1034 alternates relative to the axis 1020, which can advantageously increase the length of the flow path of the gasses within the bore 1010, such that the gasses are scrubbed of particulates with the gasses being allowed to expand and therefore cool. In some cases, a filter can be positioned around the cage 104, such that, the gasses pass through the perforations 1007, 1008 and through the filter to the ambient environment. Further, the longer flow path can, as described above, decrease the flow of gasses (and allow the gasses to expand and cool). Although each gap has been described with reference to the cage 1004, since the base 1002 is aligned with and coaxial to the cage 1004, the base 1002 can also be used as a reference. For example, the gap 1034 can be positioned between the free end of the support 1018 and the base 1002.

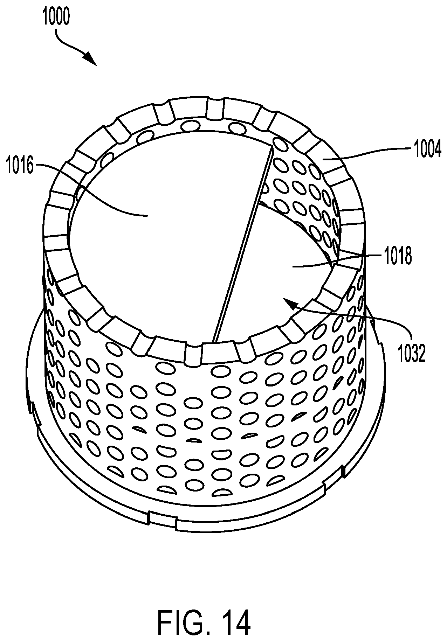

In some examples, each support 1012, 1014, 1016, 1018 can be flat, have a planar surface, etc., In some cases, each support 1012, 1014, 1016, 1018 can have a disc shape. For example, each support 1012, 1014, 1016, 1018 can be a disc (e.g., circular in shape, such as a circle) with a segment cut off (e.g., at a chord of the disc). For example, the cross-sectional view of FIG. 14 shows the segment of the support 1016 cut off thereby creating the gap 1032. In other configurations, each support 1012, 1014, 1016, 1018 can have different shapes. Although the illustrated example shows each 1012, 1014, 1016, 1018 lacking apertures, perforations, etc., directed therethrough (e.g., to better guide the flow path of the gases heated or produced by the exothermic reaction, such as steam), in other cases, each support 1012, 1014, 1016, 1018 can include perforations (e.g., to permit additional flow of exhaust gasses through the filter assembly 1000). Although each support has been shown as extending substantially perpendicular to longitudinal axis 1020, in other cases, each support can be angled (e.g., not perpendicular to the longitudinal axis 1020). Further, in some cases, the gaps positioned between each support and the cage can alternate relative to a different dimension. For example, FIG. 13 shows the gaps alternating about the longitudinal axis 1020 and relative to a first dimension. In some cases, therefore, the gaps (or other introduced gaps) can alternate about the longitudinal axis 1020 and relative to a second dimension (e.g., the view in FIG. 12). In this way, a channel (or bore) of the filter assembly can define a spiral flow path upwardly around and along the longitudinal axis 1020.

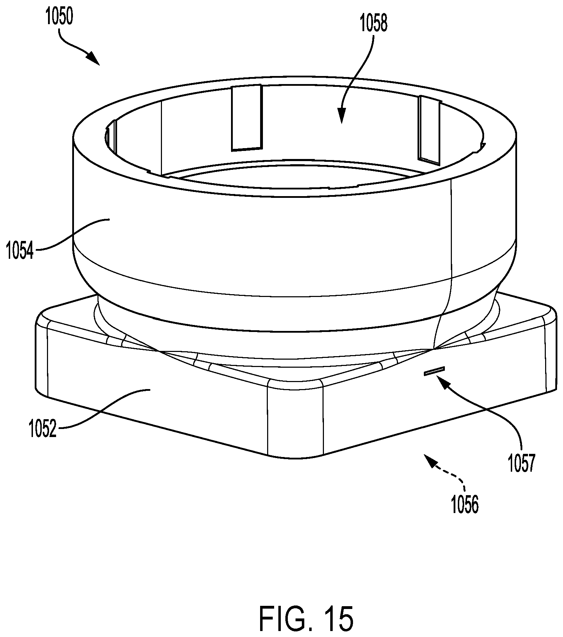

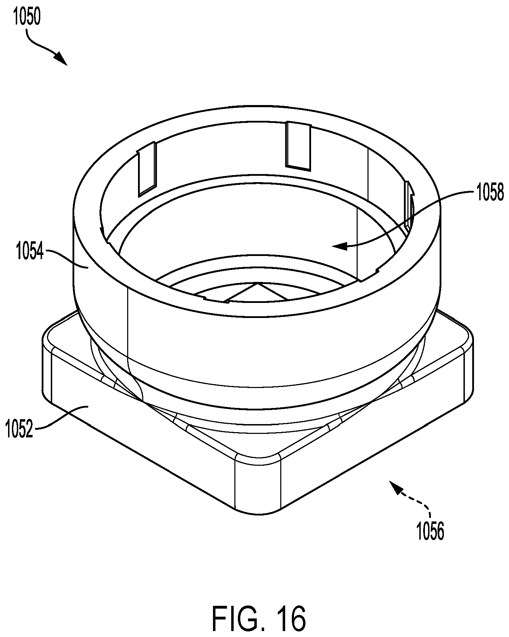

FIGS. 15-18 illustrate another example of an adapter 1050 of an exothermic welding system. The adapter 1050 shares a number of components in common with and operates in a similar fashion to the examples illustrated and described previously (e.g., the adapters 215, 725). For the sake of brevity, these common features will not be again described below in detail. Rather, previous discussion of commonly named or numbered features, unless otherwise indicated, also applies to example configurations of the adapter 1050.

The adapter 1050 can include a base 1052 and a cup 1054 coupled to the base 1052. The base 1052 engages with and can seal with a mold (e.g., the mold 205). For example, the base 1052 can be positioned over a pedestal of a mold (e.g., the pedestal 210 of the mold 205). As another example, the base 1052 can be positioned around a periphery of the mold 205 (e.g., such as exterior surfaces). Accordingly, the base 1052 and specifically the recess of the base 1052 described below, can have the same shape as the mold. This can help to ensure that a proper seal is created between the adapter and the mold to prevent gasses from escaping at the interface between these components. Similarly, the cup 1054, which can extend upwardly away from the base 1052, can engage with a base of a filter assembly. For example, the cup 1054 can engage with the base 1002 of the filter assembly 1000. Therefore, the cup 1054, and recess of the cup 1054, can have the same shape as the base 1002 of the filter assembly 1000 (e.g., a curved shape, a cylindrical shape, etc.). In some cases, the adapter 1050 can include a cutout 1057 (e.g., to receive an ignition strip). The cutout 1057 can be directed though the base 1052 and extend into the recess 1056 of the base 1052.

The base 1052 can include a recess 1056, while the cup 1054 can include a recess 1058. Each recess 1056, 1058 can be fluidly coupled together, for example, via an aperture. As described above, the mold can be inserted into the recess 1056 of the base 1052, such that the base 1052 surrounds a portion of the base 1052. Similarly, the base 1002 of the filter assembly 1000 can be inserted into the recess 1058 of the cup 1054, such that the cup 1054 surrounds a portion of the base 1002.

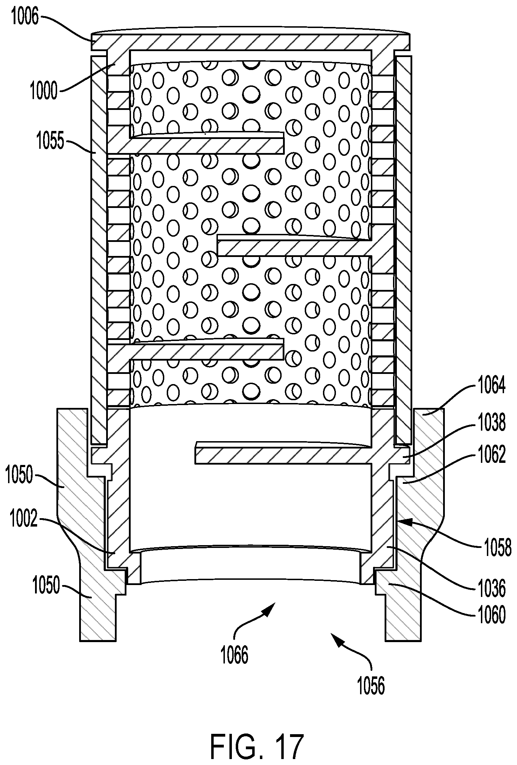

FIG. 17 illustrates an engagement between the adapter 1050 and the filter assembly 1000. The adapter 1050 seals with and surrounds the filter assembly 1000. For example, the cup 1054 of the adapter 1050 engages with, surrounds, and seals with the base 1002 of the filter assembly 1000. In some cases, the base 1002 includes one or more steps that engage with one or more steps of the cup 1054 of the adapter 1050. For example, the base 1002 can include steps 1036, 1038, each of which can extend circumferentially around the entire filter assembly 1000, while the adapter 1050 (e.g., and specifically the cup 1054 of the adapter 1050) can include steps 1060, 1062. The step 1036 of the base 1052 of the filter assembly 1000 can sit on top of and can engage with the step 1060 of the adapter 1050. Similarly, the step 1038 of the base 1002 of the filter assembly 1000 can sit on top of and can engage with the step 1062 of the adapter 1050. In some cases, the engagement between these steps can ensure that the filter assembly 1000 seats properly with the adapter 1050, and therefore creates an adequate seal therebetween. In some configurations, a rim 1064 of the cup 1054 can extend past the step 1038 (e.g., which can be also defined as a flange) when the adapter 1050 is engaged with the filter assembly 1000. In this way, the rim 1064 can provide a further seal location to ensure that gasses flow through the bore 1010 and not at the interface between the adapter 1050 and the filter assembly 1000.

In some examples, a filter 1055 (e.g., similar to filter 225) may be arranged circumferentially around the assembly 1000 to capture and filter particulates exiting the assembly 1000 (e.g., through the perforations, etc.). In some examples, the filter 1055 can be arranged between the cap 1006 and the step 1038 so that the cap and step retain the filter in position during exothermic welding operations.

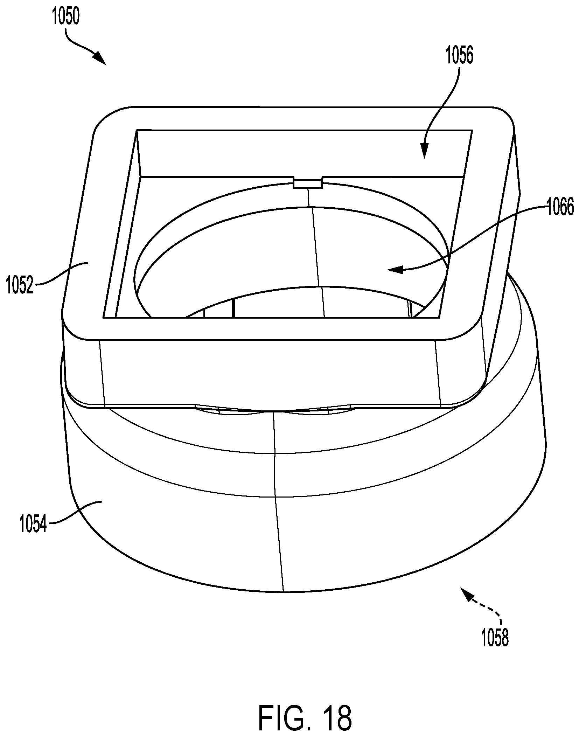

As described above, the recesses 1056, 1058 can be fluidly coupled together. For example, the adapter 1050 can include an aperture 1066 positioned between the recesses 1056, 1058 and fluidly coupling the recesses 1056, 1058 together. In some cases, a bottom end of the base 1002 can be inserted into the aperture 1066. FIG. 18 shows a bottom view of the adapter 1050, illustrating the aperture 1066 and the recess 1056. In some cases, the aperture 1066 can have a circular shape, while in other cases, the aperture 1066 can have other shapes. Although the recess 1056 is shown in FIG. 18 as being rectangular, the recess 1056 can have other shapes (e.g., so as to match the shape of the mold).

In some examples, the adapter 1050 can be formed out of a different material than the filter assembly 1000. For example, the adapter 1050 can be formed out of a polymer, while the filter assembly 1000 can be formed out of a metal. As a more specific example, the adapter 1050 can be formed out of silicone, which can not only expand around to provide an improved seal with the base 1002 of the filter assembly 1000 (e.g., retract around the filter assembly 1000), but can also withstand the high temperature of gasses, particulates, etc., produced by the exothermic reaction (e.g., a thermite reaction).

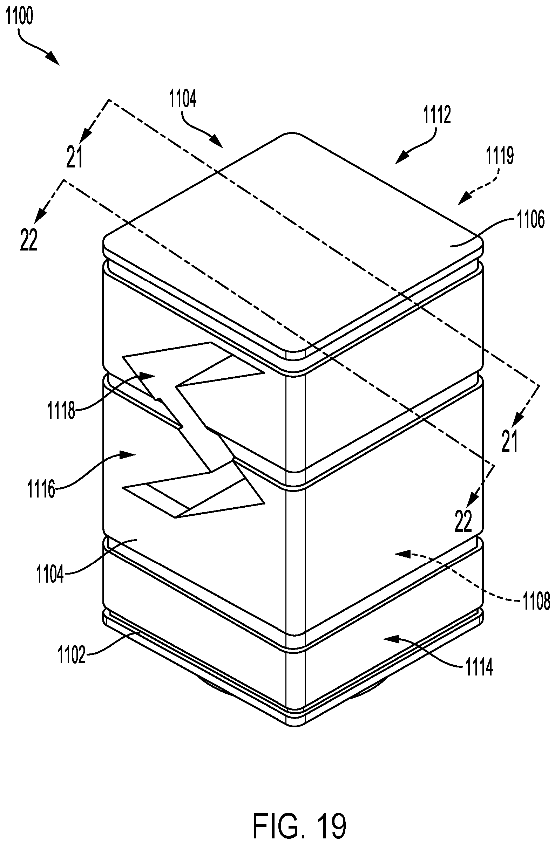

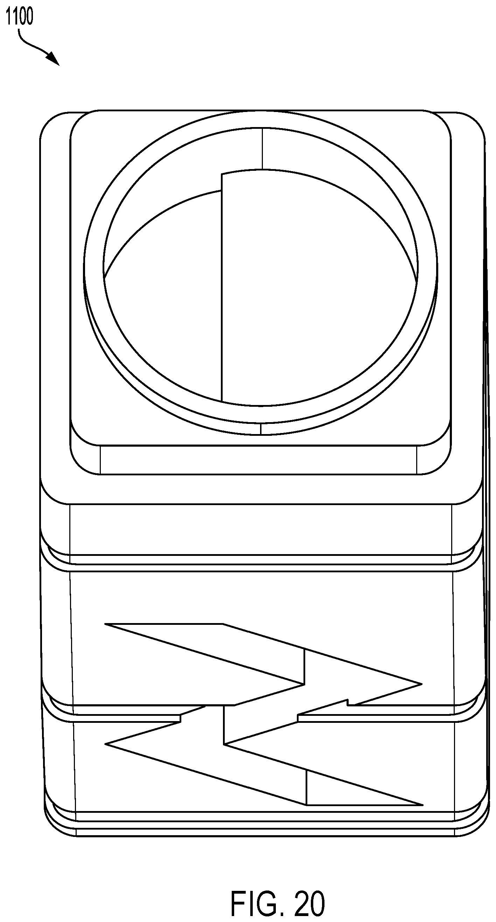

FIGS. 19-22 illustrate another example of a filter assembly 1100 of an exothermic welding system. The filter assembly 1100 shares a number of components in common with and operates in a similar fashion to the examples illustrated and described previously (e.g., the filter assemblies 220, 820, 1000) For the sake of brevity, these common features will not be again described below in detail. Rather, previous discussion of commonly named or numbered features, unless otherwise indicated, also applies to example configurations of the filter assembly 1100.

The filter assembly 1100 can include a base 1102, a cage 1104, and a cap 1106, each of which can be coupled together, or can be integrally formed together as a single monolithic component (e.g., formed as a single piece of material). In some cases, forming these components together can be easier to manufacture. In some cases, some or all of the components of the filter assembly 1100 can be integrally formed together as a single monolithic component (e.g., including the supports). The cage 1104 can be partially enclosed. For example, some sides of the filter assembly 1100 do not include perforations, or stated another way, do not include passages that fluidly couple the bore 1108 of the filter assembly 1100 to the ambient environment (e.g., outside, surrounding the filter assembly 1100). As a more specific example, the filter assembly 1100, and more specifically the cage 1104, can have sides 1110, 1112, 1114, 1116. The side 1110 can be opposite the side 1114, while the side 1112 can be opposite the side 1116. Each side 1110, 1114 is solid and completely enclosed, while each side 1112, 1116 is partially opened. Specifically, each side 1112, 1116 includes a perforation 1118, 1119 that fluidly couples the ambient environment to the bore 1108 of the filter assembly 1100 (e.g., to permit gasses therethrough). In some cases, each perforation 1118, 1119 can have a zig-zag shape, or in other words, an accordion shape.

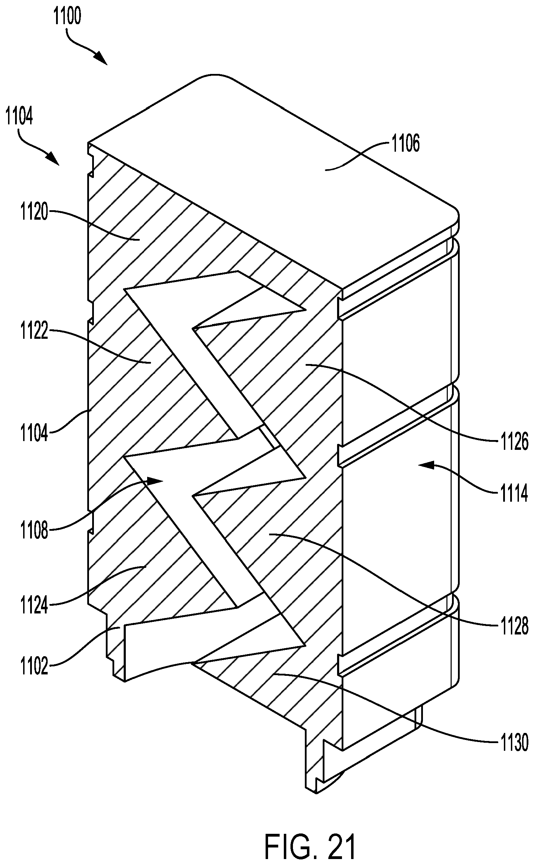

FIG. 21 shows a cross-sectional view of the filter assembly 1100 taken along line 21-21 of FIG. 19. The filter assembly 1100 can include supports 1120, 1122, 1124, 1126, 1128, 1130 positioned on opposing sides of the bore 1108, or which define the bore 1108. For example, the bore 1108, which can also have a zig-zag shape, can be aligned with the perforations 1118, 1119. Each support 1120, 1122, 1124 extends away from the side 1110 and towards the side 1114, while each support 1126, 1128, 1130 extends away from the side 1114 and towards the side 1110. Each support 1120, 1122, 1124, 1126, 1128, 1130 has at least one angled surface, which can define the bore 1108 (e.g., in which hot gasses flow through). In some cases, a support can define at least two angled surfaces, with one angle being positive (e.g., extending upwardly towards the cap 1106) and the other angle being negative (e.g., extending downwardly towards the base 1102).

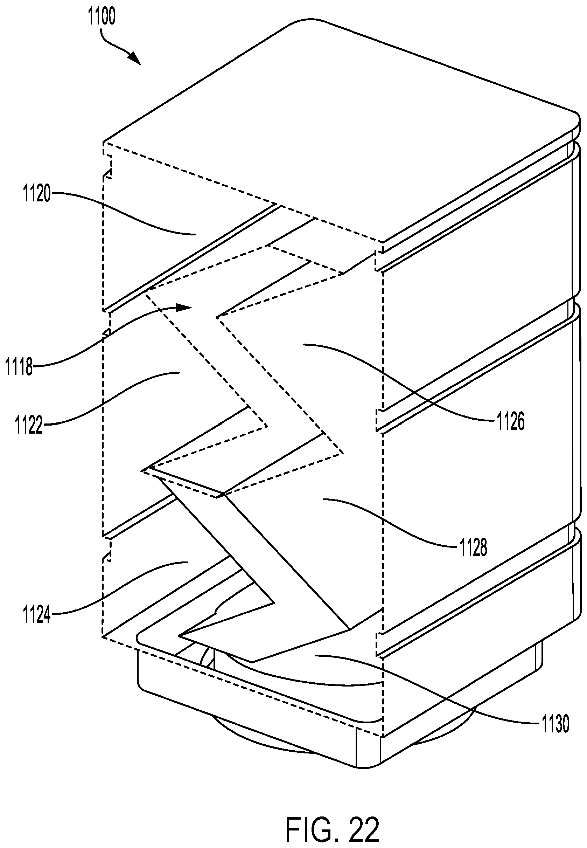

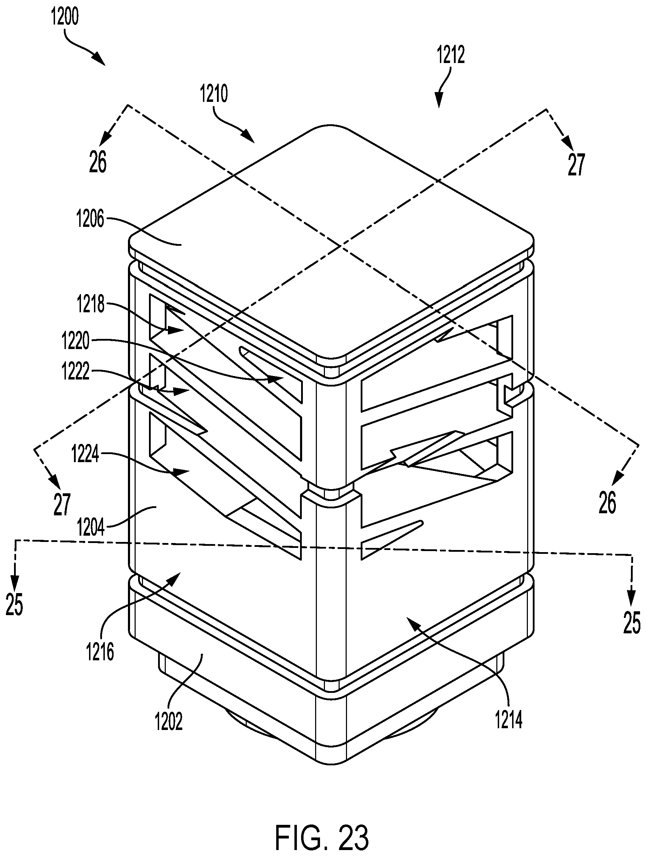

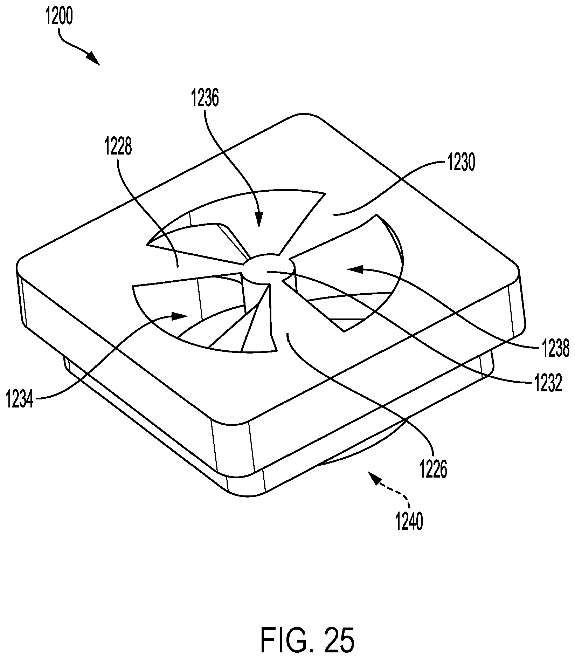

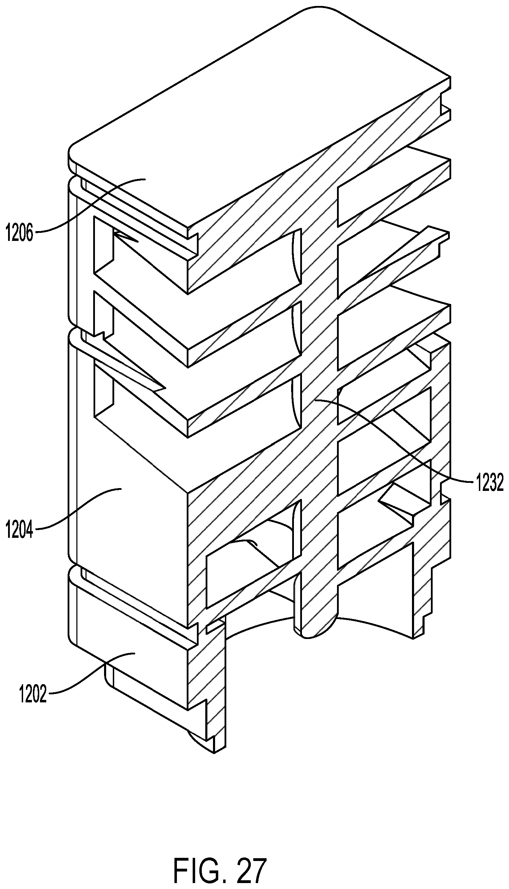

FIG. 22 shows a cross-sectional view of the filter assembly 1100 taken along line 22-22 of FIG. 19. In some cases, each perforation 1118, 1119 does not extend entirely along the extent of the bore 1108. For example, the perforation 1118 does not extend past the negative angled surface of the support 1128 (e.g., the lower surface of the support 1128). The perforation 1119 can be structured in a similar manner as well. In some configurations, each perforation can have a dimension (e.g., width) that is greater than about 0.5 inches (i.e., 12.7 mm). Similarly, each peroration can have a dimension that is less than about 1 inch (i.e., 25.4 mm). FIGS. 23-27 illustrate another example of a filter assembly 1200 of an exothermic welding system. The filter assembly 1000 shares a number of components in common with and operates in a similar fashion to the examples illustrated and described previously (e.g., the filter assemblies 220, 820, 1000, 1100) For the sake of brevity, these common features will not be again described below in detail. Rather, previous discussion of commonly named or numbered features, unless otherwise indicated, also applies to example configurations of the filter assembly 1200.

The filter assembly 1200 can include a base 1202, a cage 1204, and a cap 1206, each of which can be coupled together, or can be integrally formed together as a single monolithic component (e.g., formed as a single piece of material). In some cases, forming these components together can be easier to manufacture. In some cases, some or all of the components of the filter assembly 1200 can be integrally formed together as a single monolithic component (e.g., including the supports). Similarly to the other filer assemblies, the cage 1204 of the filter assembly 1200 can be partially closed. For example, some portions (e.g., lower sections of the filter assembly 1200) do not include perforations. The filter assembly 1200, and more specifically the cage 1204, can have sides 1210, 1212, 1214, 1216. The side 1210 can be opposite the side 1214, while the side 1212 can be opposite the side 1216. Each side 1210, 1212, 1214, 1216 can include a plurality of perforations. For example, the side 1210 can include perforations 1218, 1220, 1222, 1224, in which the perforations 1218, 1222, 1224 can be angled. The other sides 1212, 1214, 1216 can have similar perforations as the side 1216 and will not be described in detail for the sake of brevity. Although the illustrated example of FIG. 23 shows each side 1210, 1212, 1214, 1216 having four perforations, each side 1210, 1212, 1214, 1216 can include other numbers of perforations (e.g., one, two, three, five, etc.).

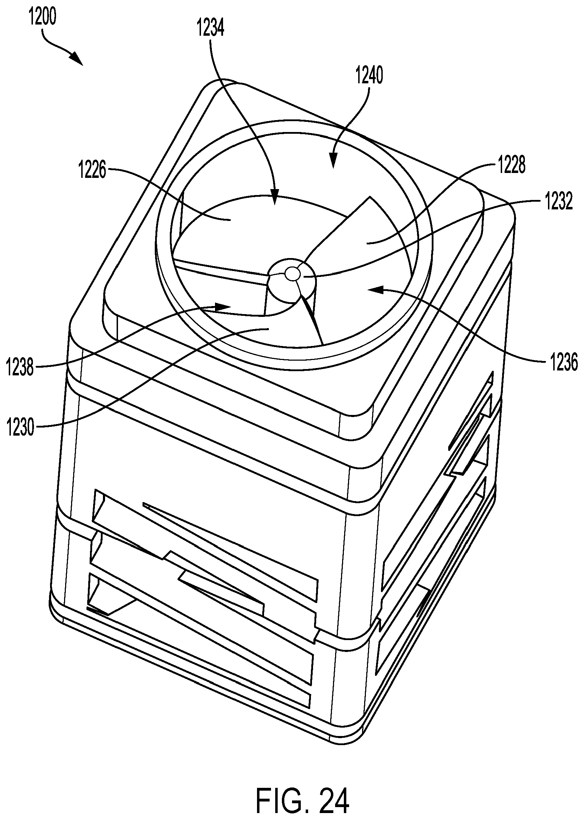

In some examples, the filter assembly 1200 can include a plurality of bores, each of which can be fluidly coupled to each perforation. For example, FIG. 24 shows a bottom view of the filter assembly 1200. The filter assembly 1200 can include a plurality of supports which can define a plurality of bores. For example, the filter assembly 1200 can include supports 1226, 1228, 1230, and a pole 1232 in which one side of each support 1226, 1228, 1230 can be coupled to the pole 1232 and the opposite side of each support 1226, 1228, 1230 can be coupled to the cage 1204 (e.g., at a respective side thereof). The filter assembly 1200 can include bores 1234, 1236, 1238, which can be defined by adjacent supports. For example, the supports 1226, 1228 can define the bore 1234, the supports 1228, 1230 can define the bore 1236, and the supports 1226, 1230 can define the bore 1238. Each bore 1234, 1236, 1238 can be fluidly coupled to a bore 1240, which can be positioned within the base 1202 of the filter assembly 1200. Accordingly, gasses and particulates can flow through the bore 1240 and into the bores 1234, 1236, 1238.

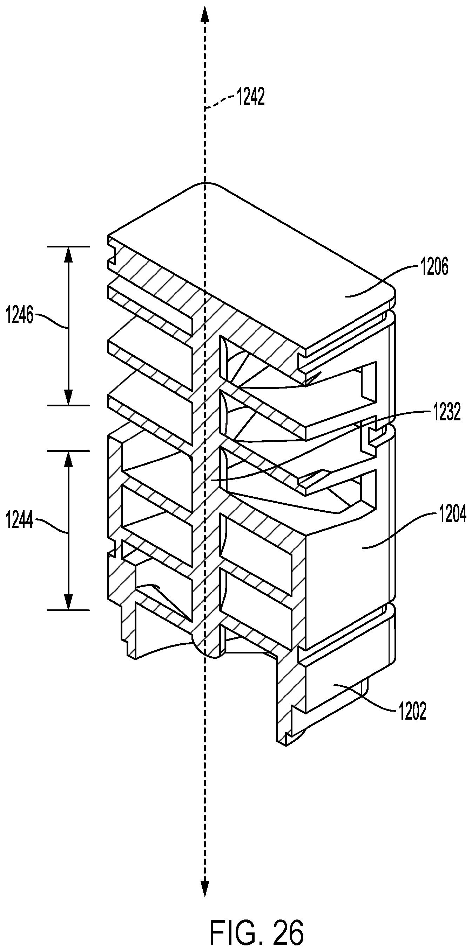

Each support 1226, 1228, 1230 and each bore 1234, 1236, 1238 can extend helically upwardly along a longitudinal axis 1242 of the filter assembly 1200 (see FIG. 26) in a clockwise or counterclockwise direction such as along the pole 1232. In other words, each support 1226, 1228, 1230 and each bore 1234, 1236, 1238 can wrap helically around the longitudinal axis 1242 of the filter assembly 1200 in a clockwise or counterclockwise direction, such as along the pole 1232. In some cases, each support 1226, 1228, 1230 and each bore 1234, 1236, 1238 can change rotational directions along the longitudinal axis 1242 of the filter assembly 1200. For example, starting at the bottom of the filter assembly 1200, these components can extend upwardly along the longitudinal axis 1242 in a counterclockwise direction, and then, at a position above the base 1202, these components can then extend upwardly along the longitudinal axis 1242 in a clockwise direction. Although the counterclockwise direction has been described first, it is appreciated that, these components can extend first in a clockwise direction, followed by a counterclockwise direction.

FIG. 26 shows a first longitudinal section 1244 in which these components extend helically upward along the longitudinal axis 1242 in a counterclockwise direction and then transitioning at the second longitudinal section 1246 to extend helically upward along the longitudinal axis 1242 in a clockwise direction.

In some cases, each perforation of the filter assembly 1200 can be aligned with a respective bore. In this way, gasses and particulates can flow in a spiral manner along the bores and flow out of the perforations. This spiral flow path can lead to a smaller pressure buildup at the bottom of the filter assembly as well as a higher temperature at the top of the filter assembly (e.g., due to a less tortuous flow path). In some cases, by switching rotational directions of the flow path can advantageously minimize pressure buildup at the bottom of the filter assembly, while decreasing the temperature at the top of the filter assembly.

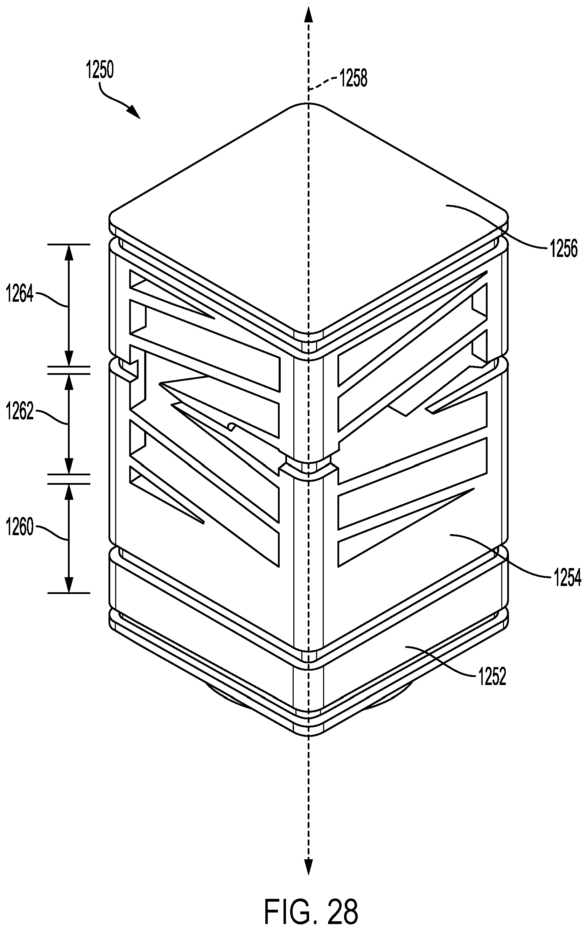

FIG. 28 illustrates another example of a filter assembly 1250 of an exothermic welding system. The filter assembly 1000 shares a number of components in common with and operates in a similar fashion to the examples illustrated and described previously (e.g., the filter assemblies 220, 820, 1000, 1100, 1200) For the sake of brevity, these common features will not be again described below in detail. Rather, previous discussion of commonly named or numbered features, unless otherwise indicated, also applies to example configurations of the filter assembly 1250.

The filter assembly 1250 can include a base 1252, a cage 1254, and a cap 1256, each of which can be coupled together or can be integrally formed together as a single monolithic component (e.g., formed as a single piece of material). In some cases, forming these components together can be easier to manufacture. The filter assembly 1250 can be structured in a similar manner as the filter assembly 1250. For example, the filter assembly 1250 can include a plurality of supports, a plurality of bores, and a pole, in which the plurality of supports and the plurality of bores extend helically, upwardly, along a longitudinal axis 1258 of the filter assembly 1250 (e.g., along the pole). Similarly to the filter assembly 1200, the components that extend helically can switch rotational directions multiple times (e.g., as opposed to a single time as in the filter assembly 1200). For example, the filter assembly 1250 can have longitudinal sections 1260, 1262, 1264, where, in longitudinal section 1260, the components extend helically upward along the longitudinal axis 1258 in a first rotational direction (e.g., counterclockwise direction), transition to the longitudinal section 1262 and extend helically upward along the longitudinal axis 1258 in a second rotational direction (e.g., clockwise direction), and transition to the longitudinal section 1264 and extend helically upward along the longitudinal axis 1258 in the first rotational direction.

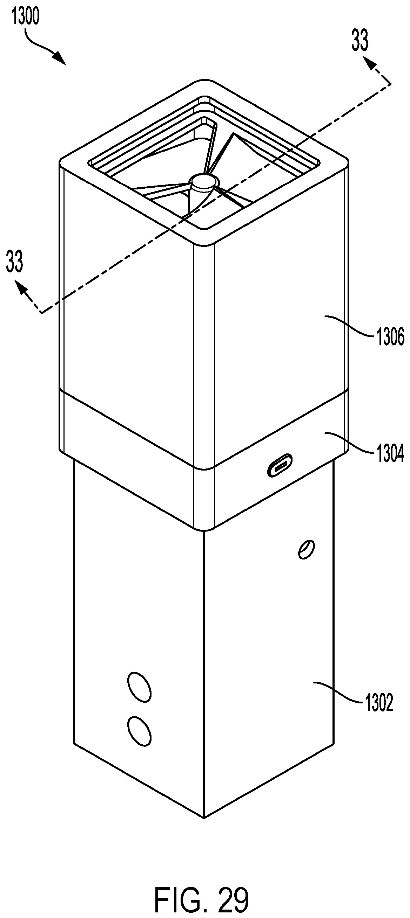

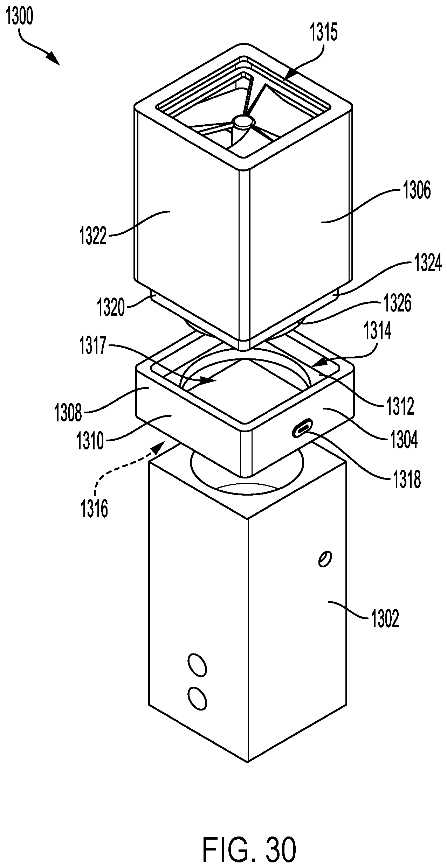

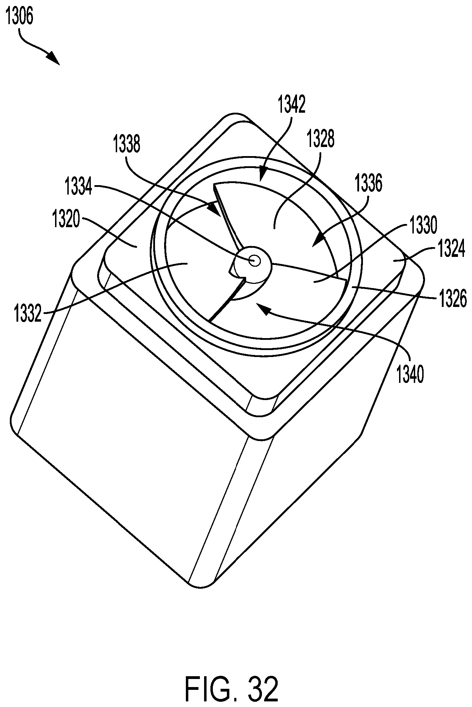

FIGS. 29, 30, 32, and 33 illustrate another example of an exothermic welding system 1300. The exothermic welding system 1300 shares a number of components in common with and operates in a similar fashion to the examples illustrated and described previously (e.g., the exothermic welding systems 200, 700, 800). For the sake of brevity, these common features will not be again described below in detail. Rather, previous discussion of commonly named or numbered features, unless otherwise indicated, also applies to example configurations of the exothermic welding system 1300.

The exothermic welding system 1300 can include a mold 1302, an adapter 1304, and a filter assembly 1306. The adapter 1304 can be positioned between the mold 1302 and the filter assembly 1306, with the filter assembly 1306 mating and engaging with a top of the adapter 1304 and with the mold 1302 mating and engaging with a bottom of the adapter 1304. The adapter 1304 can include a body 1308 including walls 1310, 1312. The wall 1310 can be a peripheral wall, and can surround some or all portions of the adapter 1304, while the wall 1312 can be an intermediate wall. For example, the wall 1310 can be positioned within an internal volume of the adapter 1304 (e.g., the body 1308 thereof), such that the wall 1308 surrounds the wall 1310. The adapter 1304 can also include recess 1314, 1316 directed into the body 1308 of the adapter 1304. For example, the recess 1314 can be directed into a top of the body 1308 of the adapter 1304, while the recess 1316 can be directed into a bottom of the body 1308 of the adapter 1304. The adapter 1304 can also include a hole 1317 directed through the wall 1312 (e.g., the intermediate wall), in which the hole 1317 provides a fluid pathway between the recesses 1314, 1316 (e.g., the hole 1317 fluidly couples the recesses 1314, 1316 together). In some cases, the adapter 1304, similarly to other configurations, can include a cutout 1318, which can extend from the ambient environment (e.g., surrounding the adapter 1304), through the body 1308 of the adapter 1304, and into the internal volume of the adapter 1304. In this way, the cutout 1318 can receive an ignition strip, such that the ignition strip can be inserted into the cutout 1318 and a portion of the ignition strip can reside in the internal volume of the adapter 1304 (e.g., such that when the ignition strip is ignited, the ignition strip starts the exothermic reaction).

The filter assembly 1306 can include a base 1320 and a cage 1322 which can be coupled together, or can be integrally formed together as a single monolithic component (e.g., formed as a single piece of material). In some cases, forming these components together can be easier to manufacture. In some cases, some or all of the components of the filter assembly 1306 can be integrally formed together as a single monolithic component (e.g., including the supports). Similarly to the other filer assemblies, the cage 1322 of the filter assembly 1306 can be partially closed. For example, some portions (e.g., lateral side walls) of the filter assembly 1306 do not include perforations, while other portions of the filter assembly 1306 includes one or more perforations 1315 (e.g., a single perforation, hole, etc.). In some cases, the one or more perforations 1315 can be a single perforation at a top of the filter assembly 1306. The filter assembly 1306, and more specifically the cage 1322, can have a plurality of sides (e.g., four sides) that define the peripheral shape of the cage 1322. As described above, each side of the cage 1322 can lack any perforations (e.g., does not include perforations, such that each side is solid). In some cases, therefore, the cage 1322 can define a body having solid sides. Accordingly, as described below, particulates, exhaust gasses, etc., from the exothermic reaction are blocked from passing through the side walls of the body.

The base 1320 of the filter assembly 1306, which can be coupled to and positioned below the cage 1322, can define protrusions 1324, 1326. Each protrusion 1324, 1326 can be positioned below and extend in a direction away from the bottom of the cage 1322 (e.g., and towards the mold 1302). The protrusion 1326 can be positioned below the protrusion 1324, with the protrusion 1324 surrounding the protrusion 1326 (e.g., the protrusion 1324 having a larger dimension, such as a diameter, than the protrusion 1324, such as a width). In some cases, the protrusion 1324 can be longer (e.g., have a greater height) than the protrusion 1326. In other words, the protrusion 1324 extends a greater distance downwardly than the protrusion 1326.

In some configurations, the filter assembly 1306 can include a plurality of bores, each of which can be fluidly coupled to each perforation (e.g., the one or more perforations 1315 at the top of the filter assembly 1306) and a plurality of supports which can define the plurality of bores. In some cases, each bore and each support can be curved. For example, the filter assembly 1306 can include supports 1328, 1330, 1332, and a pole 1334. In some cases, one side of each support 1328, 1330, 1332 can be coupled to the pole 1334 and the opposite side of each support 1328, 1330, 1332 can be coupled to the a wall of the filter assembly 1306 (e.g., at a respective side thereof). The filter assembly 1306 can include bores 1336, 1338, 1340, which can be defined by adjacent supports. For example, the supports 1328, 1330 can define the bore 1336, the supports 1328, 1332 can define the bore 1338, and the supports 1330, 1332 can define the bore 1340. Each bore 1336, 1338, 1340 can be fluidly coupled to a bore 1342, which can be positioned within the base 1320 of the filter assembly 1306 (e.g., specifically the protrusion 1326 defining the bore 1342). Accordingly, gasses and particulates can flow through the bore 1342 and into the bores 1336, 1338, 1340.

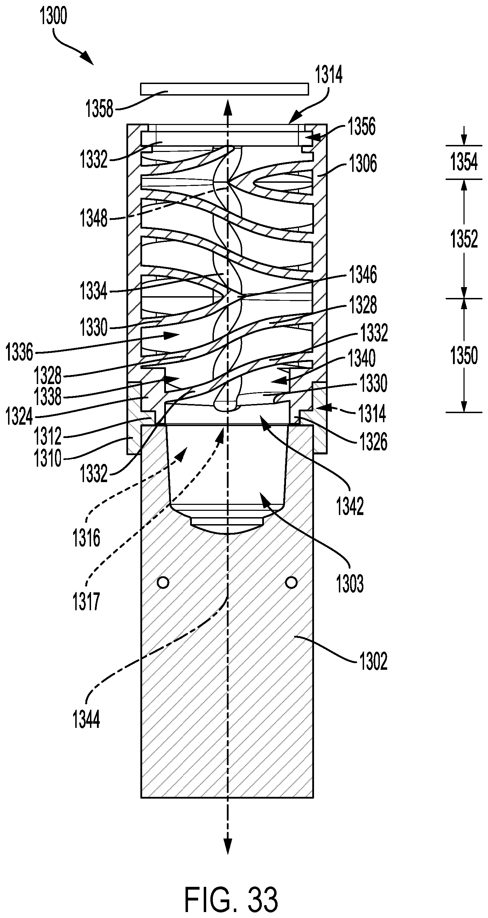

Each support 1328, 1330, 1332 and each bore 1336, 1338, 1340 can extend helically along a longitudinal axis 1344 of the filter assembly 1306 (see FIG. 33) in a clockwise or counterclockwise direction such as along the pole 1334. In other words, each support 1328, 1330, 1332 and each bore 1336, 1338, 1340 can wrap helically around (e.g., and upwardly along) the longitudinal axis 1344 of the filter assembly 1306 in a clockwise or counterclockwise direction, such as along the pole 1334. In some cases, each support 1328, 1330, 1332 and each bore 1336, 1338, 1340 can change rotational directions along the longitudinal axis 1344 of the filter assembly 1306 (e.g., one time, a plurality of times, etc.). For example, starting at the bottom of the filter assembly 1306, these components (e.g., the supports 1328, 1330, 1332 and each bore 1336, 1338, 1340, etc.) can extend upwardly along the longitudinal axis 1344 in a counterclockwise direction, and then, at a first position 1346 above the base 1320, these components can extend upwardly along the longitudinal axis 1344 in a clockwise direction, and then at a second position 1348 above the first position, these components can extend upwardly along the longitudinal axis 1344 in a counterclockwise direction. Although the counterclockwise direction has been described first, it is appreciated that, these components can extend in a clockwise direction, followed by a counterclockwise direction, and followed by a clockwise direction.

In some cases, the filter assembly 1306 can define these different longitudinal sections 1350, 1352, 1354, in which each support 1328, 1330, 1332 and each bore 1336, 1338, 1340 extend helically upwardly in a rotational direction (e.g., different rotational directions). For example, along the longitudinal section 1350 each support 1328, 1330, 1332 and each bore 1336, 1338, 1340 can extend helically upward in a rotational direction (e.g., a counterclockwise direction), along the longitudinal section 1352 each support 1328, 1330, 1332 and each bore 1336, 1338, 1340 can extend helically upward in a rotational direction (e.g., a clockwise direction), and along the longitudinal section 1354 each support 1328, 1330, 1332 and each bore 1336, 1338, 1340 can extend helically upward in a rotational direction (e.g., a counterclockwise direction). In some cases, the height of the sections 1350, 1352 can be substantially the same, while the height of the section 1354 can be smaller than each section 1350, 1352. As described above, changes in rotational direction of the bores and supports can induce turbulence to the flow of exhaust gasses and particulates to slow them down to permit cooling (e.g., via heat transfer) and decrease the speed of particulates. Further, within a particular section, the helical extension of the bores and supports can provide a relatively unimpeded flow path (e.g., laminar flow), permitting the gasses to expand and therefore cool and decreasing or eliminating any pressure buildup of exhaust gasses. Accordingly, multiple locations of unimpeded flow path allowing for gas expansion and cooling (and decreased pressure buildup), followed by changes in rotation direction allowing for gasses to slow down and thus cool (e.g., via heat transfer) can advantageously provide two different ways of cooling the exhaust gasses, while, at the same time, decreasing the speed of particulates (e.g., byproducts of the exothermic reaction).

The adapter 1304 can provide a seal between the mold 1302 and the filter assembly 1306. In this way, when the adapter 1304 is engaged with the mold 1302 and the filter assembly 1306, the adapter 1304 can seal gasses (e.g., exhaust) and particulates generated from the exothermic reaction, such that, the gasses and particulates do not escape laterally (e.g., radially away from the axis 1344), but rather are forced upwardly through the adapter 1304 and upwardly through the filter assembly 1306. For example, the filter assembly 1306 (e.g., the base 1320 of the filter assembly 1306) can be inserted into the recess 1314 of the adapter 1304. Specifically, the protrusion 1326 of the filter assembly 1306 can be inserted into the hole 1317 of the adapter 1304, and the protrusion 1324 can be inserted into the recess 1314 until the protrusion 1324 contacts the wall 1312 of the adapter 1304 (e.g., a terminal end surface of the protrusion 1324 contacts a top surface of the wall 1312 of the adapter 1304). In some cases, a side wall of the filter assembly 1306 (e.g., that surrounds the protrusion 1324, when the filter assembly 1306 is inserted into the adapter 1304 (or otherwise engaged with the adapter 1304) can contact a top of the wall 1310. Further, an exterior surface of the filter assembly 1306 can be flush with an exterior surface of the adapter 1304.

The mold 1302 can also be inserted into the adapter 1304 (e.g., at an opposite side of the adapter 1304 as the filter assembly 1306). For example, the mold 1302 can be inserted into the recess 1316 until the mold 1302 contacts the wall 1312 of the adapter 1304 (e.g., a top surface of the mold 1302 contacts a bottom surface of the wall 1312 of the adapter 1304). A crucible chamber 1303 of the mold 1302 can be aligned with the hole 1317 of the adapter 1304, and the bore 1342 of the filter assembly 1306, when the mold 1302 is inserted into the adapter 1304 and the filter assembly 1306 is inserted into the adapter 1304. In this way, gasses and particulates produced in the crucible chamber 1303 flow upwardly out of the crucible chamber 1303, through the hole 1317 of the adapter 1304, through the bore 1342, and through the bores 1336, 1338, 1340, and out the one or more perforations 314. In some cases, the filter assembly 1306 can include a channel 1356, positioned at a top of the filter assembly 1306, below the one or more perforations 1315 and above the supports 1328, 1330, 1332 and bores 1336, 1338, 1340. In some cases, the channel 1356 can have a dimension (e.g., a width) that is larger than a dimension (e.g., a width) of each perforation 1315. The channel 1356 can receive a filter, which can block and trap particulates generated during an exothermic reaction, from passing through and out each perforation 1315. For example, the exothermic welding system 1300 can include a filter 1358, which can be inserted, through the perforation 1315 and into the channel 1356. In some cases, the channel 1356 can prevent or otherwise block the filter 1358 from falling or moving within the filter assembly 1306.

In some cases, when the mold 1302 and the filter assembly 1306 are inserted into the adapter 1304, the adapter 1304, for example, the wall 1310 of the adapter 1304, can extend along the mold 1302 and the filter assembly 1306. For example, a bottom portion of the wall 1310 of the adapter 1304 can extend below and past the interface between the mold 1302 and the filter assembly 1306 (e.g., where a bottom surface of the base 1320 of the filter assembly 1306 contacts a top surface of the mold 1302). Similarly, a top portion of the wall 1310 of the filter assembly 1306 can extend above and past the interface between the mold 1302 and the filter assembly 1306 (e.g., until the top portion contacts and abuts against a peripheral wall of the filter assembly 1306). This extending of the adapter 1304 can help seal and prevent gasses and particulates from escaping between the components.

In some cases, the adapter 1304 can retract around the mold 1302 and the filter assembly 1306 (e.g., the base 1320 of the filter assembly 1306), for example, when the respective components are inserted into the adapter 1304. In this way, the adapter 1304 can provide an additional seal to the mold 1302 and the filter assembly 1306. This can be especially advantageous since the components of the exothermic welding system 1300 expand during the exothermic process (e.g., as the components heat up from the exothermic reaction). In some cases, therefore, the adapter 1304 can be formed out of a resilient, elastic, etc., material, such as, for example, a polymer (e.g., silicone).

In some cases, the protrusion 1324 of the filter assembly 1306, the mold 1302, and the recesses 1314, 1316 of the adapter 1304 can have the same shape (e.g., the same peripheral shape), which in specific cases, can be rectangular (e.g., square), circular, octagonal, hexagonal, etc. In some cases, the hole 1317 of the adapter 1304, the crucible chamber 1303 of the mold 1302, and the protrusion 1326 of the filter assembly 1306 can have the same shape (e.g., the same peripheral shape), which in specific cases, can be circular, rectangular (e.g., square), etc. In some cases, each support of the filter assembly 1306 (e.g., the supports 1328, 1330, 1332) can include one or more perforations therethrough (e.g., holes). For example, a first perforation can be directed into a first section of a support (e.g., the support 1328) and a second perforation can be directed into a second section of the support, positioned above the first section of the support. In other words, different axial sections of the support (e.g., extending along the axis 1344) can have different perforations. Further, each section of the support can include different sizes of perforations, and different sections of the same support can include different sizes of perforations (e.g., as compared to the first section of the support). In some cases, the perforations through each support can assist in the airflow of the assembly (e.g., the flow of exhaust gasses through the filter assembly 1308).

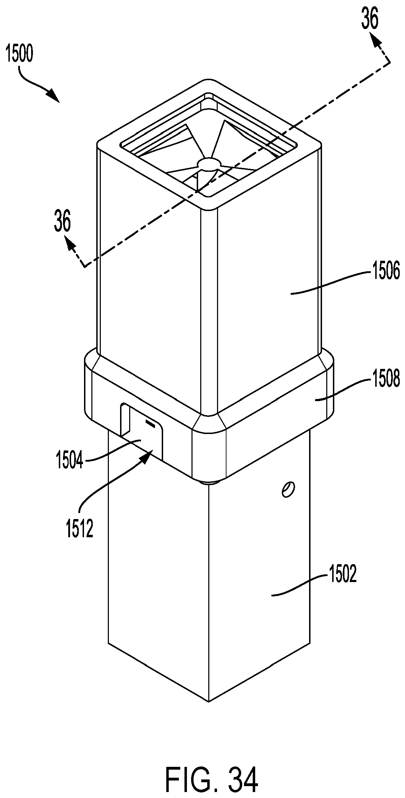

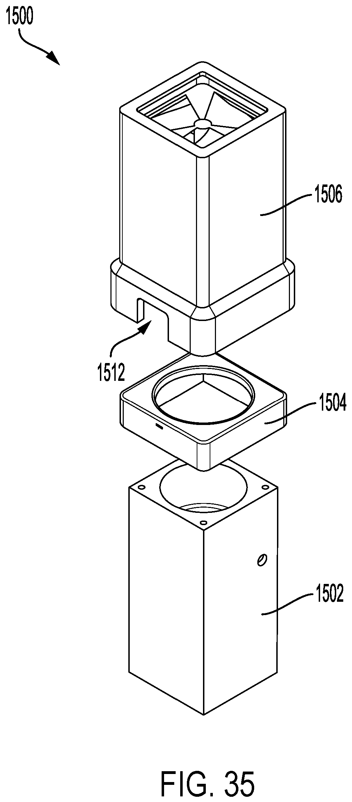

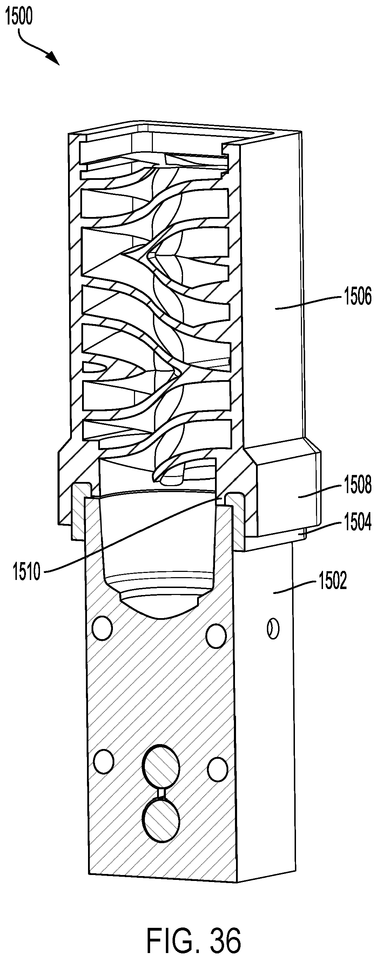

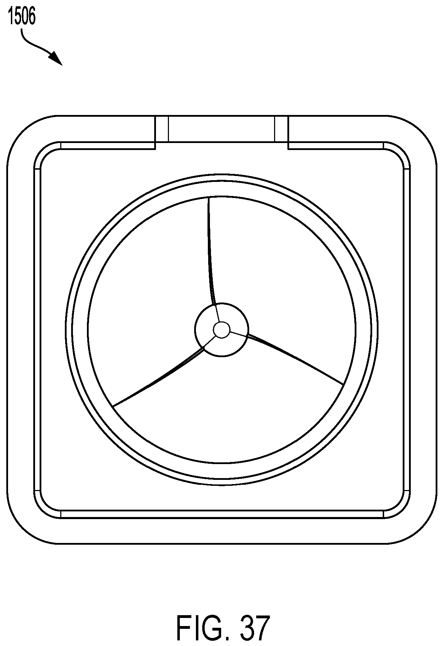

FIGS. 34-37 illustrate another example of an exothermic welding system 1500. The exothermic welding system 1500 shares a number of components in common with and operates in a similar fashion to the examples illustrated and described previously (e.g., the exothermic welding systems 200, 700, 800, 1300). For the sake of brevity, these common features will not be again described below in detail. Rather, previous discussion of commonly named or numbered features, unless otherwise indicated, also applies to example configurations of the exothermic welding system 1500.

The exothermic welding system 1500 can include a mold 1502, an adapter 1504, and a filter assembly 1506. The exothermic welding system 1500 can be structured in a similar manner as the exothermic welding system 1300. For example, the filter assembly 1506 can include helically winding supports and bores to route exhaust gasses and particulates up through the filter assembly 1506. In some cases, the filter assembly 1506 can include a skirt 1508, which can surround the mold 1502 and the adapter 1504 when, for example, the adapter 1504 is positioned on the mold 1502 and the filter assembly 1506 is positioned on the adapter 1504. In some cases, the adapter 1504 can be positioned between an wall 1510 (e.g., inner wall) of the filter assembly 1506 (e.g., that defines a bore of the filter assembly 1506, similarly to the bore 1342 of the filter assembly 1306) and the skirt 1508 (e.g., the adapter 1504 sandwiched between the mold 1502 and the filter assembly 1506). For example, the adapter 1504 can be positioned on the mold 1502, and the filter assembly 1506 can be positioned on the adapter 1504, with the skirt 1508 surrounding the adapter 1504. In some cases, the adapter 1504 (e.g., a wall, such as a peripheral wall of the adapter 1504) can extend below the skirt 1508 of the filter assembly 1506, for example, when the adapter 1504 is positioned on the mold 1502 and the filter assembly 1506 is positioned on the adapter 1504. In some cases, the skirt 1508 can include a cutout 1512 that can be aligned with a cutout of the adapter 1504 (e.g., that receives an ignition strip). In this way, when assembled, the skirt 1508 can secure the adapter 1504, while at the same time ensuring that the cutout of the adapter 1504 is not blocked by the skirt 1508.

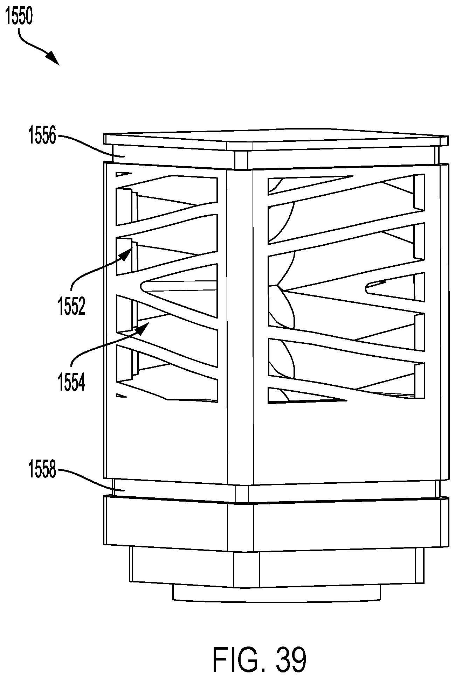

FIG. 39 illustrates another example of a filter assembly 1550 of an exothermic welding system. The filter assembly 1550 shares a number of components in common with and operates in a similar fashion to the examples illustrated and described previously (e.g., the filter assemblies 220, 820, 1000, 1100, 1200, 1306, 1506) For the sake of brevity, these common features will not be again described below in detail. Rather, previous discussion of commonly named or numbered features, unless otherwise indicated, also applies to example configurations of the filter assembly 1550.

In some cases, the filter assembly 1550 can include perforations 1552, 1554, and channels 1556, 1558, in which the perforations are positioned between the perforations 1552, 1554 (e.g., the channel 1556 is positioned above the perforations 1552, 1554, while the channel 1558 is positioned below the perforations 1552, 1554). In some cases, each channel 1556, 1558 can receive a respective elastic band, fastener, closure, cable tie, zip tie, etc., to couple a filter to the filter assembly 1550. For example, the filter can surround the periphery of the filter assembly covering the perforations 1552, 1554 (and others). Then, each fastener (e.g., cable tie) can be positioned over the filter and within the respective channel 1556, 1558 to couple the filter to the filter assembly 1550 (e.g., the body of the filter assembly 1550). This can ensure that the filter maintains its current position and continues to cover the perforations 1552, 1554 (and others), during, for example, an exothermic welding process.

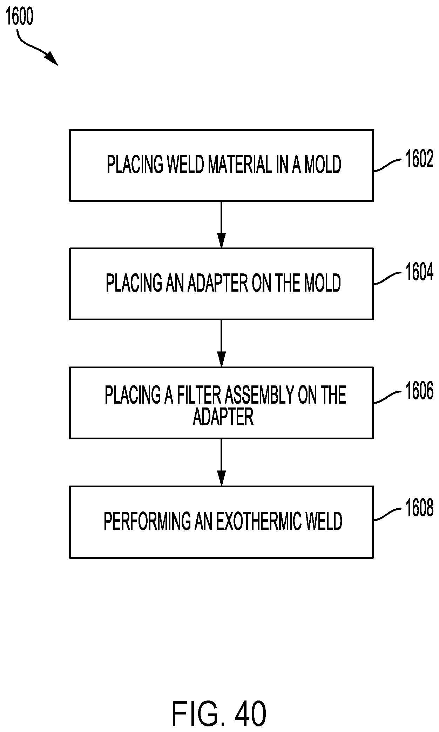

FIG. 40 illustrates a flowchart of a process 1600 for preparing for and initiating an exothermic weld, which can be implemented using any of the systems (e.g., exothermic welding systems), assemblies (e.g., filter assemblies), etc., as described herein. In some cases, the process 1600 can be a method of using an exothermic welding system, which can include any of the exothermic welding systems described herein.

At block 1602, the process 1600 can include placing weld material in a mold. In some cases, this can include placing the weld material within a crucible chamber of the mold, such as, for example, placing a cup containing the weld material within the crucible chamber of the mold.

At block 1604, the process 1600 can include placing an adapter on the mold (e.g., securing a first end of the adapter around the mold). In some cases, this can include inserting the mold in a recess of the adapter (e.g., a bottom recess), for example, until a top surface of the mold contacts a wall of the adapter (e.g., an intermediate wall). In some cases, when the adapter is placed on the mold, a hole of the adapter aligns with the crucible chamber of the mold.

At block 1606, the process 1600 can include placing a filter assembly on the adapter (e.g., securing the filter assembly to a second end of the adapter to filter assembly). In some cases, this can include inserting the filter assembly into a recess of the adapter. For example, this can include inserting a base of the filter assembly into the recess of the adapter (e.g., a top recess of the adapter). More specifically, this can include inserting a first protrusion of the filter assembly into the recess of the adapter and inserting a second protrusion of the filter assembly into the hole of the adapter (e.g., directed into a wall of the adapter). In some cases, this can include inserting the filter assembly into the recess of the adapter until the filter assembly contacts a wall (e.g., the intermediate wall) of the adapter (e.g., a top surface thereof).

At block 1608, the process 1600 can include performing an exothermic weld. In some cases, this can include placing an ignition strip into a cutout of the adapter, and then, subsequently, igniting the ignition strip (e.g., with an electrical igniter) to initiate the exothermic reaction (e.g., to create the exothermic weld). In some cases, the process 1600 can implement a filtered exothermic welding process, using for example, the filter assembly (and the adapter). However, in other cases, the process 1600 can perform an unfiltered exothermic welding process by, for example, the mold itself (e.g., the adapter and the filter assembly not being secured to the mold).

In some configurations, any of the filter assemblies including the filter assemblies 220, 820, 1000, 1100, 1200, 1250, 1306, 1506, 1550 can be 3D printed, which can be advantageous from a manufacturing perspective in that the perforations can be created without stamping a flat sheet of material and rolling the sheet to form the cylinder. In other words, 3D printing the assembly, and specifically, a cage thereof, can eliminate the failure point introduced by rolling the sheet into the cylinder and joining ends of the cylinder together (e.g., where the failure point would extend along the longitudinal axis). This can be especially advantageous in exothermic reaction use cases as described herein, where high temperatures and pressures are present that may more easily deform connection points.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as examples of the invention, of the utilized features and implemented capabilities of such device or system.

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. One or more features/components of the systems described may be incorporated into/used in a corresponding method and vice versa.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Also as used herein, unless otherwise limited or defined, "substantially parallel" indicates a direction that is within ± 12 degrees of a reference direction (e.g., within ± 6 degrees), inclusive.

Also as used herein, unless otherwise limited or defined, "substantially perpendicular" indicates a direction that is within ± 12 degrees of perpendicular a reference direction (e.g., within ± 6 degrees), inclusive.

Also as used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together into a unified assembly, is not an integral (or integrally formed) element.

Additionally, unless otherwise specified or limited, the terms "about" and "approximately," as used herein with respect to a reference value, refer to variations from the reference value of ± 15% or less, inclusive of the endpoints of the range. Similarly, the term "substantially equal" (and the like) as used herein with respect to a reference value refers to variations from the reference value of less than ± 10%, inclusive. Where specified, "substantially" can indicate in particular a variation in one numerical direction relative to a reference value. For example, "substantially less" than a reference value (and the like) indicates a value that is reduced from the reference value by 10% or more, and "substantially more" than a reference value (and the like) indicates a value that is increased from the reference value by 10% or more.

Also as used herein, unless otherwise limited or specified, "substantially identical" refers to two or more components or systems that are manufactured or used according to the same process and specification, with variation between the components or systems that are within the limitations of acceptable tolerances for the relevant process and specification. For example, two components can be considered to be substantially identical if the components are manufactured according to the same standardized manufacturing steps, with the same materials, and within the same acceptable dimensional tolerances (e.g., as specified for a particular process or product).

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order.

The previous description of the disclosed examples is provided to enable any person skilled in the art to make or use the invention. Given the benefit of this disclosure, various modifications to these examples will be readily apparent to those skilled in the art, and the principles defined herein may be applied to other examples without departing from the spirit or scope of the invention. Thus, the invention is not intended to be limited to the examples shown herein but is to be accorded the widest scope consistent with the principles and novel features disclosed herein.

## Claims

1. An exothermic welding system, comprising:
a mold defining a crucible chamber;
a filter assembly including a helical bore to direct particulates generated by an exothermic welding process within the crucible chamber; and
an adapter defining an exhaust passage between a first end and a second end of the adapter, the adapter selectively securable to the mold at the first end and selectively securable to the filter assembly at the second end.

2. The exothermic welding system of claim 1, wherein the first end of the adapter is securable to the mold via a press-fit.

3. The exothermic welding system of claim 1 or claim 2, wherein the filter assembly includes:
a filter housing; and
filter media arranged within the filter housing to filter particulates generated by the exothermic welding process.

4. The exothermic welding system of claim 3, wherein the filter assembly is securable to the second end of the adapter via a press-fit between the filter housing and the adapter.

5. The exothermic welding system of claim 1 or of any of claims 2 to 4, wherein the crucible chamber is configured to receive a cup containing weld material, and wherein the cup includes an ignition strip extending from a rim of the cup.

6. The exothermic welding system of claim 5, wherein the first end of the adapter defines a cutout to permit the ignition strip to pass through the adapter, with the cup received in the crucible chamber and the adapter secured to the mold.

7. The exothermic welding system of claim 1 or of any of claims 2 to 6, wherein the first end of the adapter includes a retaining ledge configured to surround the mold to selectively secure the adapter to the mold.

8. The exothermic welding system of claim 1 or of any of claims 2 to 7, wherein the bore extends helically upward along a longitudinal axis of the filter assembly.

9. The exothermic welding system of claim 8, wherein the bore extends helically upward along the longitudinal axis of the filter assembly in a first rotational direction for a first section of the filter assembly; and
wherein the bore extends helically upward along the longitudinal axis of the filter assembly in a second rotational direction for a second section of the filter assembly, such that the bore changes rotational direction from the first rotational direction to the second rotational direction.

10. The exothermic welding system of claim 1 or of any of claims 2 to 9, wherein the adapter surrounds a portion of the filter assembly when the adapter is secured to the filter assembly; and
wherein the adapter surrounds a portion of the mold when the adapter is secured to the mold.

11. The exothermic welding system of claim 1 or of any of claims 2 to 10, wherein the filter assembly includes a base including a first protrusion and a second protrusion, the first protrusion surrounding the second protrusion; and
wherein when the adapter is secured to the filter assembly, the first protrusion is positioned in a recess of the adapter, and the second protrusion is positioned in a hole of the adapter; and
wherein the adapter includes a polymer, and wherein the polymer includes silicone.

12. A method of using an exothermic welding system, the method comprising:
placing a cup containing weld material within a crucible chamber defined by a mold; and
selectively performing either of a filtered exothermic welding process or an unfiltered exothermic welding process, including:
for the filtered exothermic welding process, securing a first end of an adapter around the pedestal defined by the mold; and
for the filtered exothermic welding process, securing a filter assembly to a second end of the adapter to filter particulates generated by the exothermic welding process.

13. The method of claim 12, further comprising:
for the filtered exothermic welding process, arranging a cutout defined by the first end of the adapter so that an ignition strip of the cup passes through the cutout.

14. The method of claim 13, further comprising:
for the filtered exothermic welding process, igniting the weld material via the ignition strip to perform the filtered exothermic welding process.

15. The method of claim 13 or claim 14, further comprising:
for the unfiltered exothermic welding process, igniting the weld material via an ignition strip extending from the cup to perform the unfiltered exothermic welding process.
